(19) Europäisches Patentamt
European Patent Office
Office européen des brevets

(11) **EP 2 187 466 B1**

(12) **EUROPEAN PATENT SPECIFICATION**

(45) Date of publication and mention
of the grant of the patent:
**07.11.2012 Bulletin 2012/45**

(51) Int Cl.:
*H01M 2/22* (2006.01)     *H01M 4/70* (2006.01)
*H01M 10/0587* (2010.01)   *B26D 7/00* (2006.01)
*B26F 1/38* (2006.01)

(21) Application number: **09014245.6**

(22) Date of filing: **13.11.2009**

(54) **Nonaqueous electrolyte battery, cutter and method of manufacturing electrode**

Wasserfreie Elektrolytbatterie, Schneider und Verfahren zur Elektrodenherstellung

Batterie d'électrolyte non-aqueuse, découpeuse et procédé de fabrication d'électrode

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **14.11.2008 JP 2008292506**

(43) Date of publication of application:
**19.05.2010 Bulletin 2010/20**

(60) Divisional application:
**11190720.0 / 2 448 041**
**11190721.8 / 2 448 042**

(73) Proprietor: **Kabushiki Kaisha Toshiba
Minato-ku,
Tokyo 105-8001 (JP)**

(72) Inventors:
• **Hikata, Seiichi**
  **Tokyo 105-8001 (JP)**
• **Morishima, Hideaki**
  **Tokyo 105-8001 (JP)**
• **Ishii, Haruchika**
  **Tokyo 105-8001 (JP)**

(74) Representative: **HOFFMANN EITLE
Patent- und Rechtsanwälte
Arabellastrasse 4
81925 München (DE)**

(56) References cited:
EP-A2- 1 207 565     JP-A- 2 174 058
JP-A- 10 162 861     JP-A- 11 339 758
JP-A- 57 180 077     JP-A- 58 140 970
JP-A- 2001 266 857   JP-A- 2005 209 494
US-A- 6 026 722      US-A1- 2005 123 824

**Description**

The present invention relates to a method of manufacturing an electrode of a nonaqueous electrolyte battery.

Recently, studies concerning nonaqueous electrolyte secondary batteries characterized by rapid charge and high output discharge have been enthusiastically made. These studies have given rise to such ideas that the crystal grain size of the current collecting foil of the electrode is reduced, the particle diameter of the active material is reduced and the thickness of the active material layer is reduced.

As mentioned above, in order to attain high capacity in the nonaqueous electrolyte secondary battery, it is necessary to increase the amount of the active material. This implies that in the case of an electrode group having a coil structure, the number of electrode layers is increased. Next, when a high capacity is attained, a problem arises as to how to extract current from that battery efficiently. In the case of adding tabs by welding when a large current is extracted, a number of tabs are required and the thickness of the welded part is increased so that the thickness of the electrode group itself is increased, which does not allow the electrode group to be put into the battery can. Also, there is such a drawback that a large-sized battery is manufactured. If the number of tabs is decreased to remove the drawback, only insufficient current is extracted. In the case where a positive electrode tab is projected from one end of the electrode group and a negative electrode tab is projected from the other end, the electrode group itself is large-sized, bringing about the necessity for increasing the size of a battery.

In the meantime, Jpn. Pat. Appln. KOKAI Publication No. 11-111340 describes that a positive electrode tab 1d and a negative electrode tab 2d are always disposed at the same intervals between tabs L3, for example, 400 mm. There are similar descriptions in Jpn. Pat. Appln. KOKAI Publication No. 2006-260786.

Also, Jpn. Pat. Appln. KOKAI Publication No. 2001-85042 discloses that in EV or HEV applications with highly frequent discharge of large current, uneven current collection may lead to the deterioration of tabs and electrode active material due to uneven current distribution and therefore has a large influence on the life of a battery, and therefore, the tabs are arranged at almost the same intervals.

However, if the above tabs are arranged at the same intervals on the positive and negative electrodes as shown in Jpn. Pat. Appln. KOKAI Publication Nos. 11-111340, 2006-260786 and 2001-85042, the positions of the tabs among them are deviated when an electrode group obtained by coiling a positive electrode and a negative electrode in a flat and spiral shape with a separator is structured, posing a problem as to inferior productivity.

Jpn. Pat. Appln. KOKAI Publication No. 11-339758 describes that the collecting lead is aligned in the position along to the diameter direction of an electrode body winding end face, thereby making very easy current collection processing work which connects the collecting lead to an external terminal.

Jpn. Pat. Appln. KOKAI Publication No. 2005-209494 describes that the intervals D1, D2, D3 and D4 between handle parts 1a and 2a is increased in order of position from the inner peripheral side to outside peripheral side of the electrode group 4, as (D1<D2<D3<D4), and therefore, each handle parts 1a and 2a may arrange to linear array for each polarity in the end face of the electrode group 4 which is formed by winding the positive electrode plate 1 and the negative electrode plate 2.

According to the present invention, there is provided a method of manufacturing a positive electrode or negative electrode in a nonaqueous electrolyte battery, comprising:

passing a band-like material comprising a band-like current collector and an active material-containing layer formed on the band-like current collector excluding one end part parallel to a long side of the band-like current collector through a space between a first roller having a blade and a second roller to cut the band-like material by the blade of the first roller, thereby cutting one tab from the one end part of the band-like current collector;
returning a position of the band-like material back to a direction reverse to a forward direction; and
repeating the cutting and returning actions alternately to cut a plurality of tabs from the one end part of the band-like current collector (claim 1).

The invention can be more fully understood from the following detailed description when taken in conjunction with the accompanying drawings, in which:

FIG. 1 is a plan view showing a positive electrode and a negative electrode in a nonaqueous electrolyte battery ;
FIG. 2 is a perspective view showing an electrode group comprising positive and negative electrodes shown in FIG. 1;
FIG. 3 is a perspective view showing another electrode group in the nonaqueous electrolyte battery ;
FIG. 4 is an exploded view showing an electrode group in another nonaqueous electrolyte battery ;
FIG. 5 is a plan view showing an upper end surface of the electrode group in the other nonaqueous electrolyte battery in the case where no tab is formed;
FIG. 6 is a partially exploded perspective view showing the electrode group in the other nonaqueous electrolyte battery ;

FIG. 7 is a sectional view of a positive electrode, a negative electrode and a separator along the line VII-VII of FIG. 6;
FIG. 8 is a partially exploded plan view showing the positive electrode shown in FIGS. 6 and 7;
FIG. 9 is a partially exploded plan view showing the negative electrode shown in FIGS. 6 and 7;
FIG. 10A is a plan view of the electrode group shown in FIG. 6 before press molding;
FIG. 10B is a top view of the electrode group shown in FIG. 6 before press molding;
FIG. 11A is a plan view of the electrode group shown in FIG. 6 after press molding;
FIG. 11B is a top view of the electrode group shown in FIG. 6 after press molding;
FIG. 12 is a perspective view showing a nonaqueous electrolyte battery;
FIG. 13 is a sectional view showing a part of the nonaqueous electrolyte battery shown in FIG. 12;
FIG. 14 is a schematic structural view showing a cutter;
FIG. 15 is an enlarged perspective view showing a part of the cutter shown in FIG. 14;
FIG. 16 is an exploded plan view showing a press cutting roller shown in FIGS. 14 and 15;
FIG. 17 is a sectional view showing a step of manufacturing a positive electrode;
FIG. 18 is a sectional view showing a step of manufacturing a positive electrode in succession to FIG. 17;
FIG. 19 is a sectional view showing a step of manufacturing a positive electrode in succession to FIG. 18;
FIG. 20 is a plan view showing a step of manufacturing a positive electrode in succession to FIG. 18;
FIG. 21 is a sectional view showing a step of manufacturing a positive electrode in succession to FIGS. 19 and 20;
FIG. 22 is a plan view showing a step of manufacturing a positive electrode in succession to FIG. 21; and
FIG. 23 is a plan view showing a step of manufacturing a positive electrode in succession to FIG. 22.

A nonaqueous electrolyte battery can be provided which is reduced in the misregistration of the tab and is superior in mass-productivity.

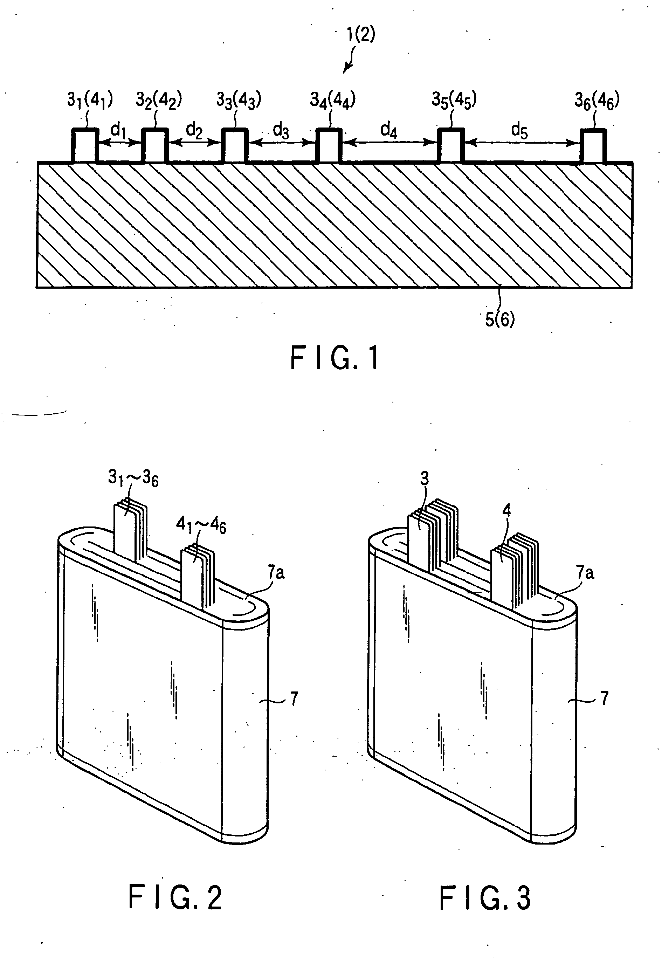

An example of the positive electrode and negative electrode to be used is shown in FIG. 1. As shown in FIG. 1, a positive electrode 1 comprises a positive electrode current collector, a plurality of band-like positive electrode tabs $3_1$ to $3_6$ projected from the positive electrode current collector and a positive electrode active material-containing layer 5 formed on each of the surfaces of the positive electrode current collector. A negative electrode 2 comprises a negative electrode current collector, a plurality of band-like negative electrode tabs $4_1$ to $4_6$ projected from the negative electrode current collector and a negative electrode active material-containing layer 6 formed on each of the surfaces of the negative electrode current collector. In the positive electrode 1, distances $d_1$ to $d_5$ between the positive electrode tabs $3_1$ and $3_2$, $3_2$ and $3_3$, $3_3$ and $3_4$, $3_4$ and $3_5$ and $3_5$ and $3_6$ respectively and the distances $d_1$ to $d_5$ between negative electrode tabs $4_1$ and $4_2$, $4_2$ and $4_3$, $4_3$ and $4_4$, $4_4$ and $4_5$ and $4_5$ and $4_6$ respectively which are arranged between the inner peripheral side and outer peripheral side of an electrode group 7 are each designed to be larger as the tab is closer to the outer peripheral side and are each represented by the following equation (1).

$$2n\pi d \qquad (1)$$

where n is equal to the number of the positions of the positive electrode tabs counted from the inner peripheral side of the electrode group 7 or the number of the positions of the negative electrode tabs counted from the inner peripheral side of the electrode group 7. In other words, the number of positions of the positive electrode tabs positioned on the outer peripheral side of the electrode group among the positive electrode tabs which define the distance is defined as n. The number of positions of the negative electrode tabs positioned on the outer peripheral side of the electrode group among the negative electrode tabs which define the distance is defined as n. d is the sum of the thickness of the positive electrode 1, the thickness of the negative electrode 2 and a thickness twice the thickness of the separator and $\pi$ is the ratio of circumference of a circle to its diameter. Each thickness of the positive electrode 1, negative electrode 2 and separator is measured by an upright gauge.

For example, the positive electrode tab $3_1$ is positioned at the start of windings of the positive electrode 1 and the distance between the positive electrode tab $3_1$ and the positive electrode tab $3_2$ is defined as $d_1$. The distance $d_1$ is shown by 4$\pi$d because n is 2. The distance $d_2$ between the positive electrode tab $3_2$ and the positive electrode tab $3_3$ is shown by 6$\pi$d because n is 3. The distance $d_3$ between the positive electrode tab $3_3$ and the positive electrode tab $3_4$ is shown by 8$\pi$d because n is 4. Also, the distance $d_4$ between the positive electrode tab $3_4$ and the positive electrode tab $3_5$ is shown by 10$\pi$d because n is 5. Moreover, the distance $d_5$ between the positive electrode tab $3_5$ and the positive electrode tab $3_6$ is shown by 12$\pi$d because n is 6. This is the same for the case of the negative electrode 2.

A separator is interposed between the positive electrode and negative electrode having the structure shown in FIG. 1. The resulting material is coiled spirally and then, made into a flat shape by pressing to thereby obtain the electrode group 7 as shown in FIGS. 2 and 3, thereby making it possible to protrude the positive electrode tabs $3_1$ to $3_6$ and the negative electrode tabs $4_1$ to $4_6$ from an end surface 7a of one side of the electrode group 7, and also to arrange the positive electrode tabs $3_1$ to $3_6$ and the negative electrode tabs $4_1$ to $4_6$ in order. As a result, the productivity of a nonaqueous electrolyte battery enabling rapid charge and high-output discharge is improved. Also, even if the number of turns of the electrode group is increased, the problem concerning such a drawback that the thickness of the electrode group is too large can be solved.

The distance between the positive electrode tabs may be 300 mm or less. Also, the distance between the negative electrode tabs may be 300 mm or less.

Each width of the positive electrode tab and negative electrode tab may be 5 mm to 15 mum. If the width is suppressed to 5 mm or more, the melt of the tab can be limited when large current flows. Also, the contact between the positive electrode tab and the negative electrode tab when the positive and negative electrode tabs are projected from the end surface of one side of the electrode group can be avoided by limiting the width to 15 mm or less.

Each thickness of the positive electrode tab and negative electrode tab may be 10 $\mu$m to 20 $\mu$m. The melt of the tab can be avoided when large current flows by limiting the thickness of the tab to 10 $\mu$m or more. Also, the number of turns of the coil constituting the electrode group can be increased while suppressing an increase in the thickness of the electrode group by limiting the thickness to 20 $\mu$m or less.

In FIG. 1, the positive and negative electrode tabs are projected from the positive and negative electrode current collectors and therefore, the positive and negative electrode tabs and the positive and negative electrode current collectors are formed from the same material. In this case, the positive and negative electrode tabs and the positive and negative electrode current collectors may be formed of aluminum or an aluminum alloy.

As the positive electrode active material of the positive electrode, oxides, sulfides, polymers and the like which can absorb and release lithium ion may be used. Preferable examples of the active material include lithium-manganese composite oxides, lithium-nickel composite oxides, lithium-cobalt composite oxides and lithium iron phosphate which can obtain high positive electrode potential.

Also, as the negative electrode active material of the negative electrode, metal oxides, metal sulfides, metal nitrides, alloys and the like which can absorb and release lithium ion may be used, and materials having a lithium ion absorbing and releasing potential nobler by 0.4 V or more than the metal lithium potential are preferable. Negative electrode active materials having such a lithium ion absorbing and releasing potential suppress an alloy reaction between aluminum or an aluminum alloy and lithium, which enables aluminum or an aluminum alloy to be used for the negative electrode current collectors and structural members related to the negative electrode. Examples of the negative electrode active material include titanium oxides, lithium-titanium oxides, tungsten oxides, amorphous tin oxides, tin-silicon oxides and silicon oxides, and among these compounds, lithium-titanium oxides are preferable.

As the separator, microporous membranes, woven fabrics and nonwoven fabrics or laminates of two or more of these materials which may be the same or different may be used. Examples of the material used to form the separator may include polyethylene, polypropylene, ethylene/propylene copolymer and ethylene/butene copolymer.

Another nonaqueous electrolyte battery includes a case, an electrode group which is received in the case and has a structure in which a positive electrode and a negative electrode are spirally coiled with a separator to form a flat shape, plural positive electrode tabs each projected from one end surface of the electrode group and plural negative electrode tabs each projected from the one end surface of the electrode group.

Here, the positive electrode tab serves to collect current from the positive electrode and the negative electrode tab serves to collect current from the negative electrode. The positive electrode tab and the negative electrode tab may be formed of a conductive material such as a metal foil. Specific examples of the conductive materials may include aluminum and aluminum alloys.

These plural positive electrode tabs are electrically connected to at least two positions among plural tab positions $P_n$ of the positive electrode. These plural negative electrode tabs are electrically connected to at least two positions among plural tab positions $N_n$ of the negative electrode.

These plural tab positions $P_n$ represent a set of tab positions of the positive electrode of the nth round counted from the inner periphery of the electrode group. These plural tab positions $N_n$ represent a set of tab positions of the negative electrode of the nth round counted from the inner periphery of the electrode group. The distance between $P_n$ and $P_{n+1}$ and the distance between $N_n$ and $N_{n+1}$ each satisfy the following equation (2). It is to be noted that the distance between $P_n$ and $P_{n+1}$ may be the same as or different from the distance between $N_n$ and $N_{n+1}$.

$$A \ + \ 2n\pi(d \ + \ \alpha) \qquad (2)$$

where $d = T_1 + T_2 + (2 \times T_3)$, $0 \leq \alpha \leq (d \times 0.035)$, A is a distance from the short side at the start of the windings of the positive electrode to $P_1$ or a distance from the short side at the start of the windings of the negative electrode to $N_1$, $T_1$ is the thickness of the positive electrode, $T_2$ is the thickness of the negative electrode, $T_3$ is the thickness of the separator and n is the ratio of circumference of a circle to its diameter.

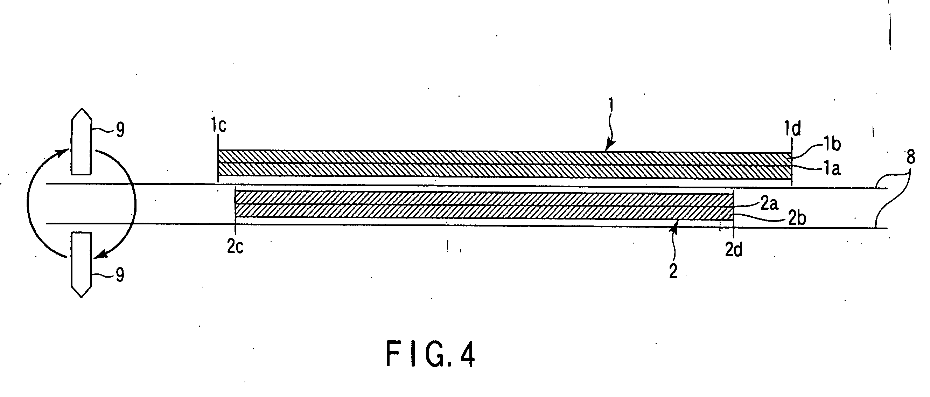

This battery will be explained with reference to the drawings. The electrode group 7 is obtained in the following manner. Specifically, a positive electrode 1 and a negative electrode 2 are spirally coiled with a separator 8 interposed therebetween in a flat or cylinder shape, followed by pressing into a desired flat form. The electrode group will be explained in more detail. As shown in FIG. 4, the positive electrode 1 comprises a band-like positive electrode current collector 1a and an active material-containing layer 1b formed on each surface of the positive electrode current collector 1a. The active material-containing layer 1b may contain a positive electrode active material, an electroconductive agent and a binder. As the positive electrode active material, the same material as that used in the battery of Fig. 1 may be used. The positive electrode current collector 1a may be formed of, for example, a metal foil. As the material for forming the positive electrode current collector 1a, for example, aluminum or an aluminum alloy may be used. On the other hand, the negative electrode 2 comprises a band-like negative electrode current collector 2a and an active material-containing layer 2b formed on each surface of the negative electrode current collector 2a. The active material-containing layer 2b may contain a negative electrode active material, an electroconductive agent and a binder. As the negative electrode active material, the same material as that used in the battery of Fig. 1 may be used. The negative electrode current collector 2a may be formed of, for example, a metal foil. As the material for forming the negative electrode current collector 2a, for example, aluminum or an aluminum alloy may be used. As the two separators 8, the same material as that explained in the battery of Fig. 1 may be used. One of these separators 8 is disposed between the active material-containing layer 1b and the active material-containing layer 2b and the other separator 8 is disposed on the other active material-containing layer 2b of the negative electrode. These members are coiled in a flat form by using two cores 9 each having a flat form. Here, among the pair of short sides of the positive electrode 1, the side close to the core 9, that is, the innermost peripheral side is the short side 1c which is the start of the windings and the opposite side is the short side 1d which is the end of the windings. Also, among the pair of short sides of the negative electrode 2, the side close to the core 9, that is, the innermost peripheral side is the short side 2c which is the start of the windings and the opposite side is the short side 2d which is the end of the windings. In FIG. 4, although the positive electrode 1 is coiled before the negative electrode 2, the negative electrode 2 may be coiled before the positive electrode 1.

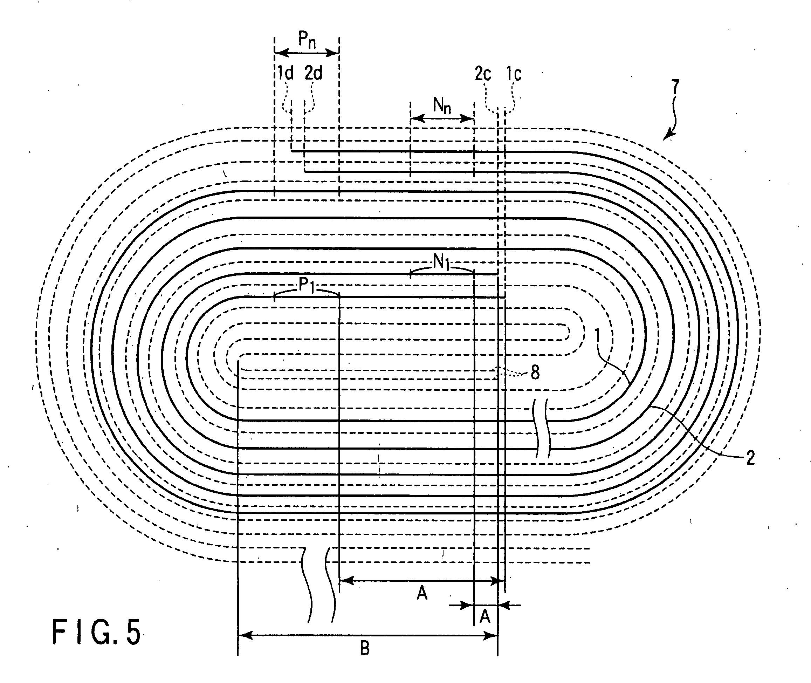

After these members are coiled by the above method, they can be made into a desired flat form by pressing to obtain the electrode group 7 having a flat form as shown in FIG. 5. The tab position $P_n$ shows a position where the positive electrode tab 3 is joined with the positive electrode 1 and the tab position $N_n$ shows a position where the negative electrode tab 4 is joined with the negative electrode 2. A tab position $P_1$ is a position of a tab joined with the positive electrode 1 of the 1st round counted from the inner periphery of the electrode group 7. The distance between the tab position $P_1$ and the short side 1c of the start of the windings of the positive electrode is represented by A. The distance A does not include the width of the tab. The case where A = 0 is shown in the battery of Fig 1. The positions of tabs joined with the positive electrode 1 after the second round are represented by $P_2$, $P_3$ ⋯. A set of tab positions until the nth round is defined as plural tab positions $P_n$. On the other hand, the tab position $N_1$ is the position of a tab joined with the negative electrode 2 of the first round counted from the inner periphery of the electrode group 7. The distance between the tab position $N_1$ and the short side 2c of the start of the windings of the negative electrode is represented by A. The distance A does not include the width of the tab. The case where A = 0 is shown in the battery of Fig 1. The positions of tabs joined with the negative electrode 2 after the second round are represented by $N_2$, $N_3$ ⋯. A set of tab positions until the nth round is defined as plural tab positions $N_n$.

The distance between $P_n$ and $P_{n+1}$ and the distance between $N_n$ and $N_{n+1}$ each satisfy the following equation.

$$A + 2n\pi(d + \alpha) \qquad (2)$$

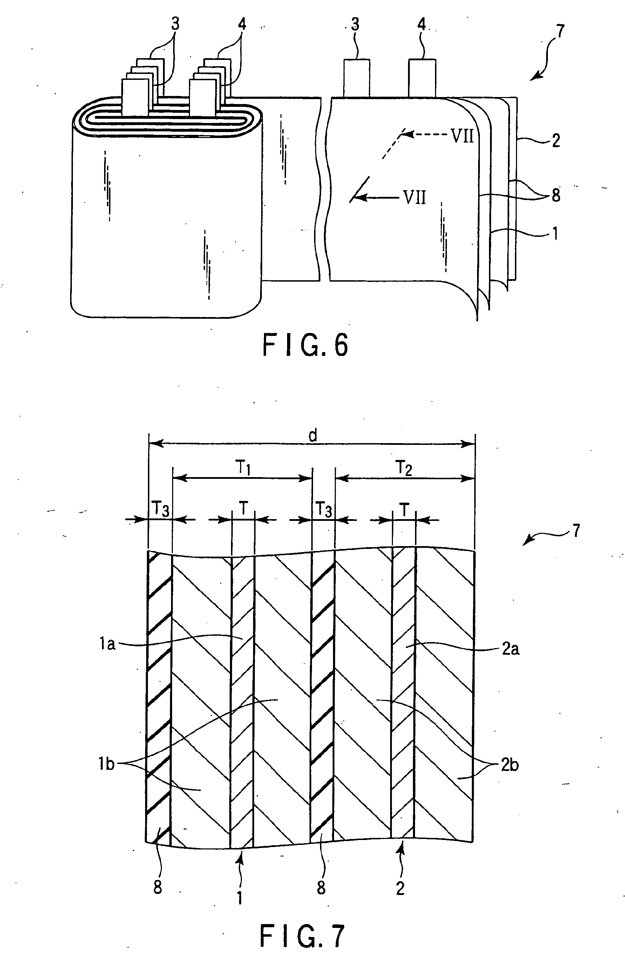

where $d = T_1 + T_2 + (2 \times T_3)$, $0 \le \alpha \le (d \times 0.035)$. As shown in FIG. 7, $T_1$ is the thickness of the positive electrode 1, $T_2$ is the thickness of the negative electrode 2, $T_3$ is the thickness of the separator 8 and $n$ is the ratio of circumference of a circle to its diameter.

As shown in FIG. 6, plural positive electrode tabs 3 are electrically connected to at least two positions among plural tab positions $P_n$ of the positive electrode 1. Plural negative electrode tabs 4 are electrically connected to at least two positions among plural tab positions $N_n$ of the negative electrode 2. As the tab, a part of the current collector may be used. Alternatively, the tab is a part separated from the current collector and this part may be joined with the current collector by welding or the like.

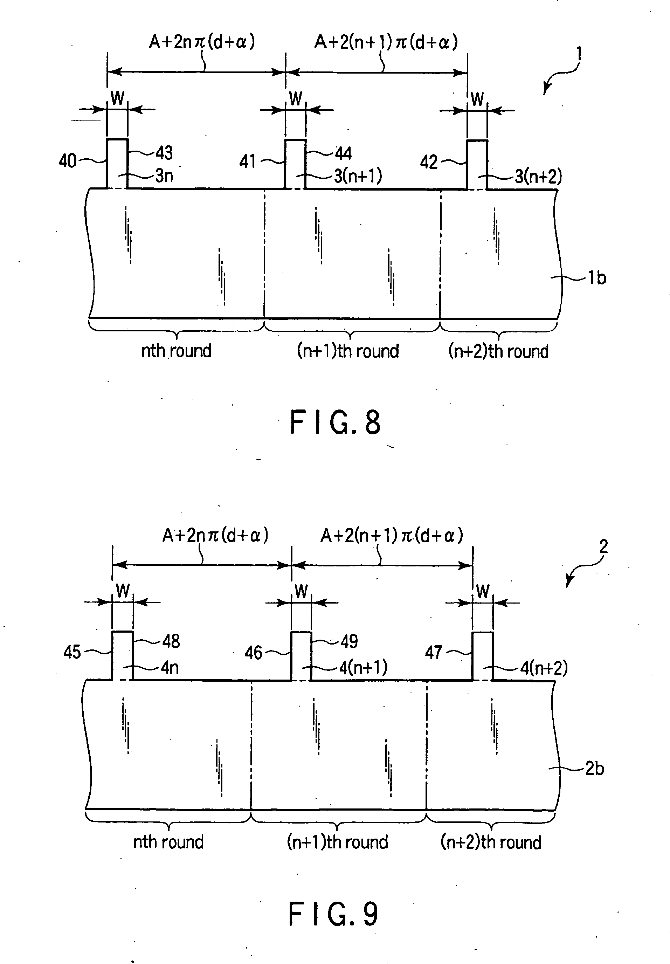

FIG. 8 is a plan view showing the essential part of the positive electrode 1 when the positive electrode tabs 3 are electrically connected to all tab positions $P_n$. FIG. 9 is a plan view showing the essential part of the negative electrode 2 when the negative electrode tabs 4 are electrically connected to all tab positions $N_n$. As shown in FIG. 8, the distance between the long side 40 close to the (n-1)th round in the positive electrode tab 3n of the positive electrode 1 of the nth round and the long side 41 close to the nth round in the positive electrode tab 3(n+1) of the positive electrode 1 of the (n + 1)th round is represented by $A + 2n\pi(d + \alpha)$. Also, the distance between the long side 41 in the positive electrode tab 3(n+1) of the positive electrode 1 of the (n + 1)th round and the long side 42 close to the (n + 1)th round in the positive electrode tab 3(n+2) of the positive electrode 1 of the (n + 2)th round is represented by A + 2(n + 1)n(d + $\alpha$). The distance between the long side 43 close to the (n+1)th round in the positive electrode tab 3n of the positive electrode 1 of the nth round and the long side 44 close to the (n+2)th round in the positive electrode tab 3(n+1) of the positive electrode 1 of the (n + 1)th round may be represented by A + 2n$\pi$ (d + $\alpha$).

As shown in FIG. 9, the distance between the long side 45 close to the (n-1)th round in the negative electrode tab 4n of the negative electrode 2 of the nth round and the long side 46 close to the nth round in the negative electrode tab 4(n+1) of the negative electrode 2 of the (n + 1)th round is represented by A + 2nn(d + $\alpha$). Also, the distance between the long side 46 in the negative electrode tab 4(n+1) of the negative electrode 2 of the (n + 1)th round and the long side 47 close to the (n + 1)th round in the negative electrode tab 4(n+2) of the negative electrode 2 of the (n + 2)th round is represented by A + 2(n + 1)n(d + $\alpha$). The distance between the long side 48 close to the (n+1)th round in the negative electrode tab 4n of the negative electrode 2 of the nth round and the long side 49 close to the (n+2)th round in the negative electrode tab 4(n+1) of the negative electrode 2 of the (n + 1)th round may be represented by A + 2nn(d + $\alpha$).

The length of the outer periphery of the electrode group 7 is increased with increase in the number of turns of the electrode group 7. For this reason, the position of the tab in the electrode group 7 is largely shifted in the direction of the width when the distance between tabs in the electrode is constant. In light of this, the distance between one side of tab and one side of tab in the electrode is designed to be A + 2nn(d + $\alpha$) which differs depending on n taking it into account that the length of the outer periphery of the electrode group 7 is increased with increase in the number of turns of the electrode group. As a result, the distance between the tabs is increased with increase in the number of turns of the electrode group 7.

For this reason, the position of the tab in the electrode group 7 is hardly shifted in the direction of the width but plural positive electrode tabs 3 can be disposed facing each other and similarly, plural negative electrode tabs 4 can be disposed facing each other. This suppresses the development of short circuits between the positive electrode tab 3 and the negative electrode tab 4. Also, it is possible to improve welding workability when a bundle of tabs is welded.

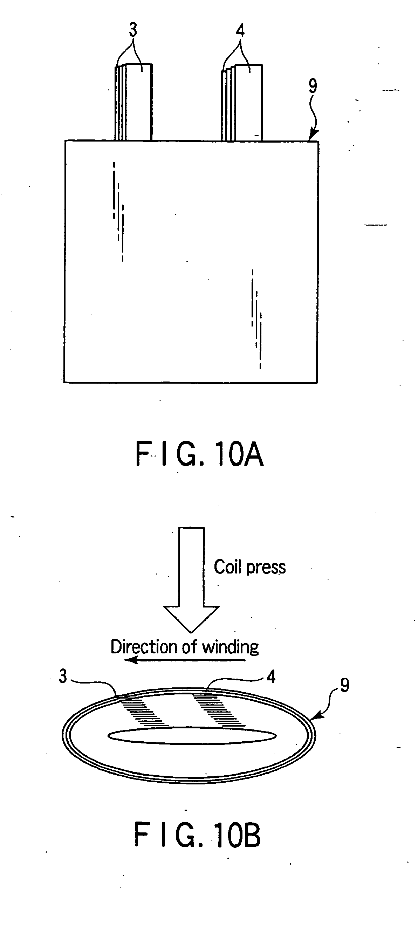

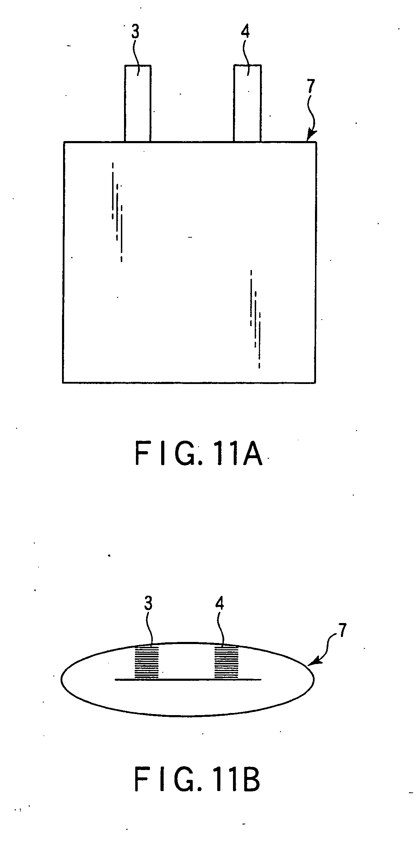

Because the misregistration of the position of the tab in press molding can be absorbed by setting the value of $\alpha$ to more than 0, the misregistration of the tab in the direction of the width can be more reduced. In press molding, the tab tends to be easily shifted into the inner peripheral side of the electrode group. The value of $\alpha$ is designed to be more than 0 to coil the positive electrode and negative electrode with the separator being disposed therebetween in a flat form. A plan view of the obtained coil 9 is shown in FIG. 10A and a view of the top surface is shown in FIG. 10B. As shown in FIGS. 10A and 10B, the positive electrode tab 3 and the negative electrode tab 4 positioned at the round when the number of turns is larger can be positioned more closely to the outer peripheral side. After that, when the coiled product is subjected to press molding to make the coiled product into a desired flat form, the tab is drawn back to the inner peripheral side, and therefore, the position of the positive electrode tabs 3 and the position of the negative electrode tabs 4 are respectively arranged in order, as shown in FIGS. 11A and 11B.

The effect of reducing the misregistration of position caused by press molding can be sufficiently obtained by making the value of $\alpha$ equal to or larger than the value calculated from the equation (d $\times$ 0.002). Also, a phenomenon that the tab is positioned at the bent part of the electrode group can be avoided by reducing the value of $\alpha$ to equal to or lower than the value calculated from the equation (d $\times$ 0.035). Therefore, the tab is drawn back to the inner peripheral side by press molding, and therefore, the position of the positive electrode tabs can be arranged in order.

The distance between the positive electrode tabs and the distance between the negative electrode tabs are respectively designed to be preferably 300 mm or less.

The width of the positive electrode tab and width of the negative electrode tab may be respectively 25% to 90% of the innermost peripheral length of the electrode group. The melt of the tab can be suppressed when large current flows by limiting the width to 25% or more of the innermost peripheral length of the electrode group. Also, when the width of the tab is limited to 90% or less of the innermost peripheral length of the electrode group, the contact between the positive electrode tab and the negative electrode tab when the positive and negative electrode tabs are projected from one end surface of the electrode group can be avoided. Here, the innermost peripheral length of the electrode group is the length of the innermost periphery of the electrode group in the longitudinal direction. For example, the major diameter B of the innermost periphery may be used shown in FIG. 5. In the electrode group 7 shown in FIGS. 4 and 5, the innermost periphery is constituted of the separator.

The width of the positive electrode tab and width of the negative electrode tab may be respectively 25% to 90% of the innermost peripheral length of the electrode group and may be respectively 5 mm to 15 mm. This makes it possible to suppress the melt of the tab and avoid the contact between the positive electrode tab and the negative electrode tab sufficiently.

The thicknesses of the positive electrode tab and negative electrode tab may be respectively 10 $\mu$m to 20 $\mu$m. The melt of the tab when large current flows can be avoided by designing the thickness to be 10 $\mu$m or more. Also, the number of turns constituting the electrode group can be increased while suppressing an increase in the thickness of the electrode group by reducing the thickness to 20 $\mu$m or less.

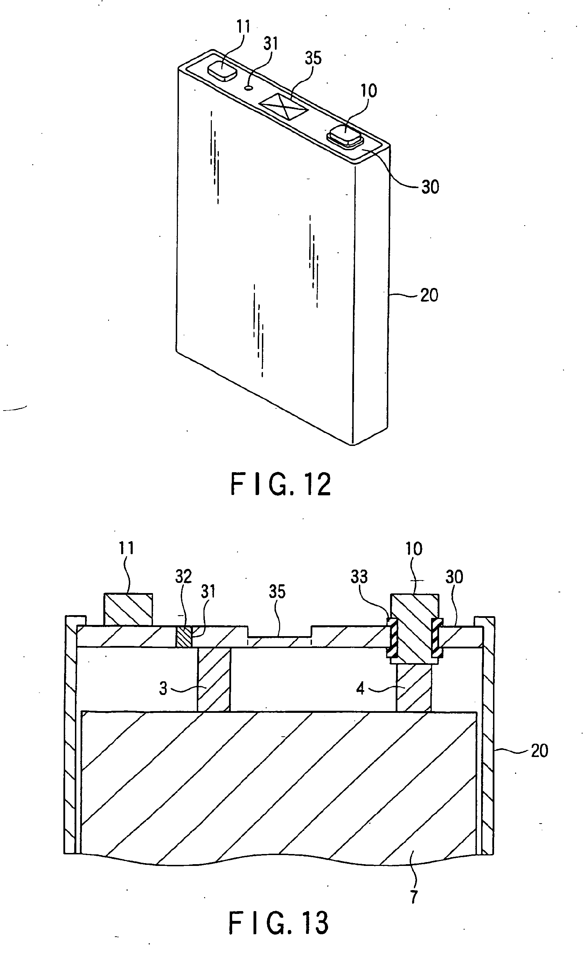

A battery according to figures 1 and 2 may have a structure shown in FIGS. 12 and 13.

As shown in FIGS. 12 and 13, the nonaqueous electrolyte battery comprises an electrode group 7, a case 20, an opening seal body 30, a safety valve 35 and a nonaqueous electrolytic solution (not shown) as the nonaqueous electrolyte. The electrode group 7 is impregnated with the nonaqueous electrolytic solution. The nonaqueous electrolyte battery has a flat rectangular shape.

As shown in FIGS. 12 and 13, the case 20 is designed to have a bottomed rectangular cylinder shape. To describe in more-detail, the case 20 has a rectangular frame shape with one end being open and the other being closed. The case 20 is provided with the electrode group 7 received therein. The case 20 is formed of a metal and therefore, the case 20 may be referred to in other words, that is, the term "metal can 20" may be used in place of the term "case 20". Here, the case 20 is formed of aluminum. Although not shown, an insulating body is disposed on the inside bottom of the case 20 which bottom is the other end of the case 20. The inside surface of the case 20 out of the area of the insulating body is coated with an insulating material.

The opening seal body 30 is formed into a rectangular plate form. The opening seal body 30 is formed so as to have a size corresponding to the opening of the case 20 and formed of a metal such as aluminum. The opening seal body 30 is joined airtightly with the opening of the case 20 by laser welding. The opening seal body 30 closes or seals the opening of the case 20.

The opening seal body 30 comprises an injection port 31 formed by making an opening in a part thereof. Therefore, a nonaqueous electrolytic solution can be injected into the case 20 from the injection port 31. After the nonaqueous electrolytic solution is injected, the injection port 31 is sealed by a sealing material 32.

A negative electrode terminal 10 and a positive electrode terminal 11 are attached to the opening seal body 30.

The negative electrode terminal 10 is attached to the opening seal body 30 by caulking via an insulating material 33 such as a resin. The negative electrode terminal 10 is electrically insulated from the opening seal body 30. Here, the negative electrode tabs 4 are collected as a bundle, which is electrically connected to the negative electrode terminal 10. The negative electrode 2 is electrically connected to the negative electrode terminal 10 through the negative electrode tab 4. The negative electrode terminal 10 may be attached to the opening seal body 30 through an insulating material such as glass by hermetic sealing.

The positive electrode terminal 11 is directly attached to and electrically connected to the opening seal body 30. Here, the positive electrode tabs 3 are collected as a bundle, which is electrically connected to the opening seal body 30. The positive electrode 1 is electrically connected to the positive electrode terminal 11 through the positive electrode tab 3.

A safety valve 35 is formed on the opening seal body 30. Here, the safety valve 35 is formed by thinning a part of the opening seal body 30. The safety valve 35 works according to the pressure in the nonaqueous electrolyte battery, e.g., the region closed by the case 20 and the opening seal body 30, and cleaves when the pressure in the nonaqueous electrolyte battery rises and exceeds a specified value, to thereby prevent the nonaqueous electrolyte battery from being broken.

The nonaqueous electrolytic solution is received in the case 20. The nonaqueous electrolytic solution is injected into the case 20 from the injection port 31. The nonaqueous electrolytic solution penetrates into the electrode group 1 and held by the electrode group 1. The nonaqueous electrolytic solution is prepared by dissolving an electrolyte in a nonaqueous solvent.

Examples of the nonaqueous solvent include ethylene carbonate (EC), propylene carbonate (PC), butylene carbonate (BC), dimethyl carbonate (DMC), diethyl carbonate (DEC), ethyl methyl carbonate (EMC), $\gamma$-butyrolactone (BL), sulfolane (SL), acetonitrile, 1,2-dimethoxy ethane, 1,3-dimethoxy propane, dimethyl ether, tetrahydrofurane (THF) and 2-methyl tetrahydrofurane. These nonaqueous solvents may be used either alone or as mixture of two or more types.

Examples of the electrolyte include lithium salts such as lithium perchlorate ($LiClO_4$), lithium hexafluorophosphate ($LiPF_6$), lithium borofluoride ($LiBF_4$), lithium hexafluoroarsenate ($LiAsF_6$) and lithium trifluoromethasulfonate ($LiCF_3SO_3$). These electrolytes may be used either alone or as mixture of two or more types.

The amount of the electrolyte dissolved in a nonaqueous solvent may be 0.2 to 3 mol/L.

An embodiment of this invention relates to a method of manufacturing an electrode, the method being used to manufacture the positive electrode and negative electrode used in the battery of figures 1 and 2.

First, a paste containing an active material, a conductive agent and a binder is prepared. The obtained paste is applied to a band-like current collector and then dried to form an active material-containing layer on the band-like current collector. The active material-containing layer is formed on the band-like current collector excluding at least one end part parallel to the longitudinal direction. The obtained band-like material is cut by a rotary die cutter to cut one tab from one end part. Then, the position of the band-like material is returned back in a direction opposite to the forward direction. The above cutting and returning operations are alternately repeated to form plural tabs from the one end part of the band-like material.

After the band-like material is cut, it is roll-pressed to thereby obtain an electrode.

As the rotary die-cutter, for example, a cutter may be used as long as it comprises a first roller with a blade and a second roller.

This cutter serves to cut the band-like material into a form of an electrode with tabs.

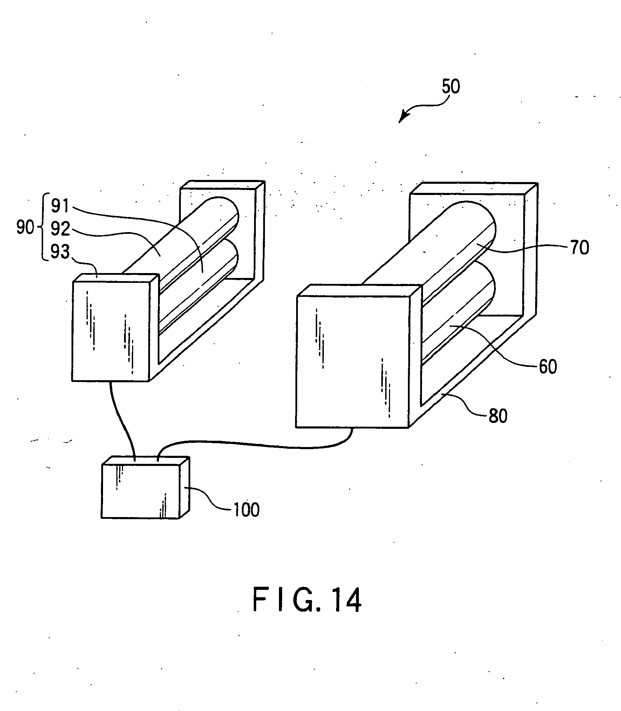

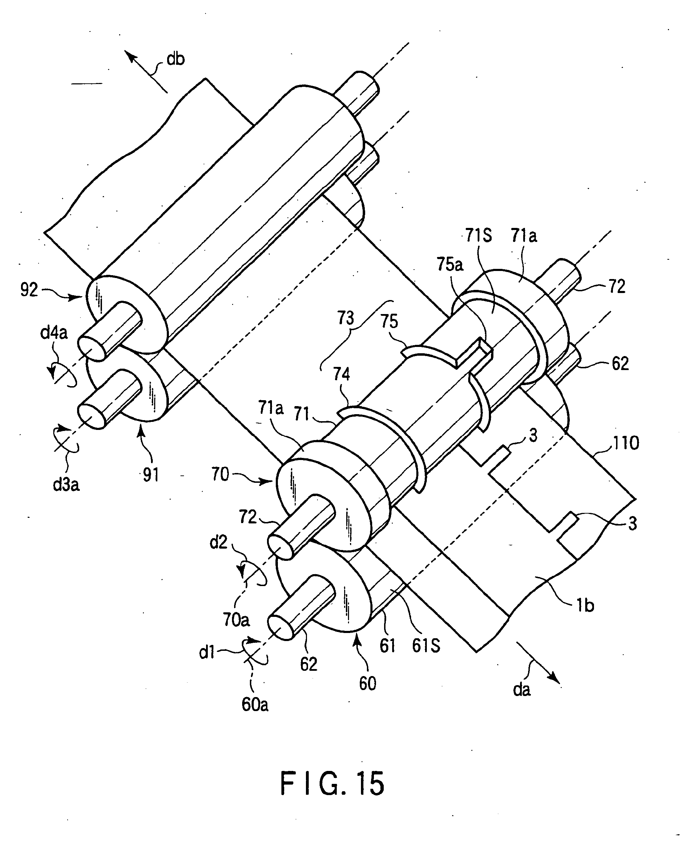

As shown in FIGS. 14 to 16, a cutter 50 comprises a receiving roller 60, a press cutting roller 70, a drive section 80, a carrying mechanism 90 and a control section 100.

The receiving roller 60 extends along a rotating axis 60a and formed in a multistage columnar form. The receiving roller 60 is supported to be rotatable around the center of the rotating axis 60a. The receiving roller 60 comprises a roller body 61 and a shaft part 62. An outer peripheral surface 61S of the roller body 61 is made into a cylinder form around the center of the rotating axis 60a and is made to be smooth. The outer peripheral surface 61S of the roller body 61 is made of a hard material. The shaft part 62 is formed on each end of the roller body 61 and extends along the rotating axis 60a. The shaft part 62 is formed such that it has a smaller diameter than the roller body 61.

The press cutting roller 70 is disposed opposite the receiving roller 60. The press cutting roller 70 extends along a rotating axis 70a parallel to the rotating axis 60a and formed in a multistage columnar form. The press cutting roller 70 is supported to be rotatable around the center of the rotating axis 70a.

The press cutting roller 70 comprises a roller body 71, a shaft part 72 and a press cutting blade 73. The roller body 71 comprises a large-diameter part 71a having a larger diameter than the center part at each end part. An outer peripheral surface 71S of the roller body 71 including the large-diameter part 71a is made into a cylinder form around the center of the rotating axis 70a and is made to be smooth. The large-diameter part 71a is brought into sliding contact with the roller body 61. The outer peripheral surface 71S of the roller body 71 is formed of a hard material. The shaft part 72 is formed at each end part of the roller body 71 and extends along the rotating axis 70a. The shaft part 72 is formed such that it has a smaller diameter than the roller body 71.

The press cutting blade 73 is disposed on a part of the outer peripheral surface 71S in the center of the roller body 71. The press cutting blade 73 is projected out of the outer peripheral surface 71S, positioned at a place apart from the large-diameter part 71a and comprises a first press cutting blade 74 and a second press cutting blade 75.

The first and second press cutting blades 74 and 75 are respectively a pinnacle blade and are secured to the central parts of the roller body 71 by a magnet. The first and second press cutting blades 74 and 75 may be formed on the roller body 71 itself by sculpture.

The first press cutting blade 74 is projected along the direction of the rotation of the press cutting roller 70. The second press cutting blade 75 is disposed apart from the first press cutting blade 74 in a direction along the rotating axis 70a and extends along the direction of the rotation of the press cutting roller 70. The second press cutting blade 75 comprises a convex pattern 75a projected toward the side opposite to the first press cutting blade 74 on a part thereof. The convex pattern 75a is formed in the size corresponding to the electrode tab, e.g., positive electrode tab 3 and negative electrode tab 17.

Each projected height of the first and second press cutting blades 74 and 75 from the outer peripheral surface 71S is designed to be slightly larger than that of the large-diameter part 71a from the outer peripheral surface 71S. The first and second press cutting blades 74 and 75 are constituted of a hard material. Each length L of the first and second press cutting blades 74 and 75 along the direction of the rotation of the press cutting roller 70 is shorter than the length of the outer periphery of the center of the roller body 71.

The band-like material made to pass through between the receiving roller 60 and the press cutting roller 70 can be press-cut by pressing the first and second press cutting blades 74 and 75 against the outer peripheral surface 61S of the roller body 61.

A driving section 80 supports the receiving roller 60 and the press cutting roller 70 in a rotatable manner. The driving section 80 works to drive and rotate the receiving roller 60 and press cutting roller 70 in directions d1 and d2 opposite to each other respectively. The receiving roller 60 is rotated in the rotating direction d1 and the press cutting roller 70 is rotated in the rotating direction d2. The band-like material is made to pass through a space between the receiving roller 60 and the press cutting roller 70 and is conveyed along a feed direction da which is the tangential direction of the rotating directions d1 and d2 under a first condition that the press cutting blade 73 is pressed against the receiving roller 60.

A carrying mechanism 90 serves to convey the band-like material through between the receiving roller 60 and the press cutting roller 70. The carrying mechanism 90 alternately repeats a feeding action and a returning action such that the distance between the tab of the nth round and tab of the (n + 1)th round counted from the inner peripheral side of the electrode group 1 is $\{A + 2nn(d + \alpha)\}$. In the feeding action, the band-like material is fed in the feed direction da so as to cut the side edge and one tab from the band-like material by the press cutting roller 70. In the returning action, on the other hand, the band-like material is returned back in the returning direction db opposite to the feeding direction after the feeding action.

Here, the carrying mechanism 90 comprises a pair of rollers 91 and 92 and a driving section 93. The driving section 93 supports the rollers 91 and 92 in a rotatable manner. The band-like material is made to pass through a space between the rollers 91 and 92. The driving section 93 serves to rotate and drive the rollers 91 and 92.

The driving section 93 rotates and drives the rollers 91 and 92 so as to feed the band-like material made to pass through a space between the receiving roller 60 and press cutting roller 70 in the feeding direction da under a first condition that the press cutting blade 73 is pressed against the receiving roller 60. The driving section 93 rotates and drives the rollers 91 and 92 so as to return the band-like material in the returning direction db under a second condition which is changed from the first condition and under which the press cutting blade 73 leaves the receiving roller 60.

After the side edge and a tab of the nth round are cut from the band-like material and before the side edge of the electrode and a tab of the (n + 1)th round are cut from the band-like material, the carrying mechanism 90 serves to carry out a returning operation such that the distance between the press cutting end of the band-like material and the press cutting position where the press cutting blade 73 is pressed against the roller 60 satisfies the following equation (3) under the above second condition:

$$D = L - W - A - \{2n\pi(d + \alpha)\} \qquad (3)$$

where L is the length of the above press cutting blade along the direction of the rotation of the above press cutting roller and W is the width of the above tab.

The control section 100 is electrically connected to the driving section 80 and the driving section 93 of the carrying mechanism 90. For this reason, the driving section 80, the carrying mechanism 90 and the driving section 93 are driven under the control of the control section 100.

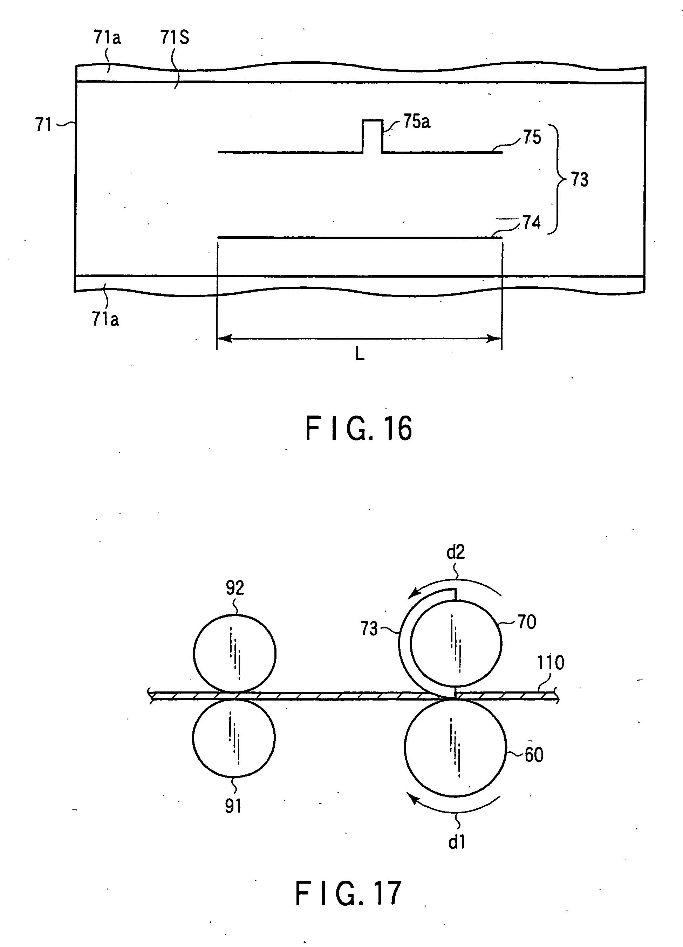

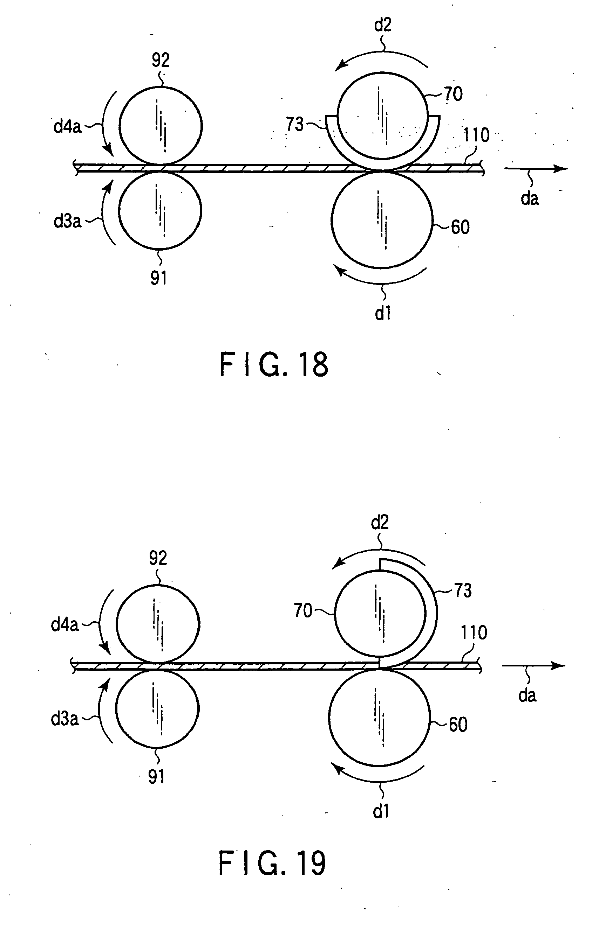

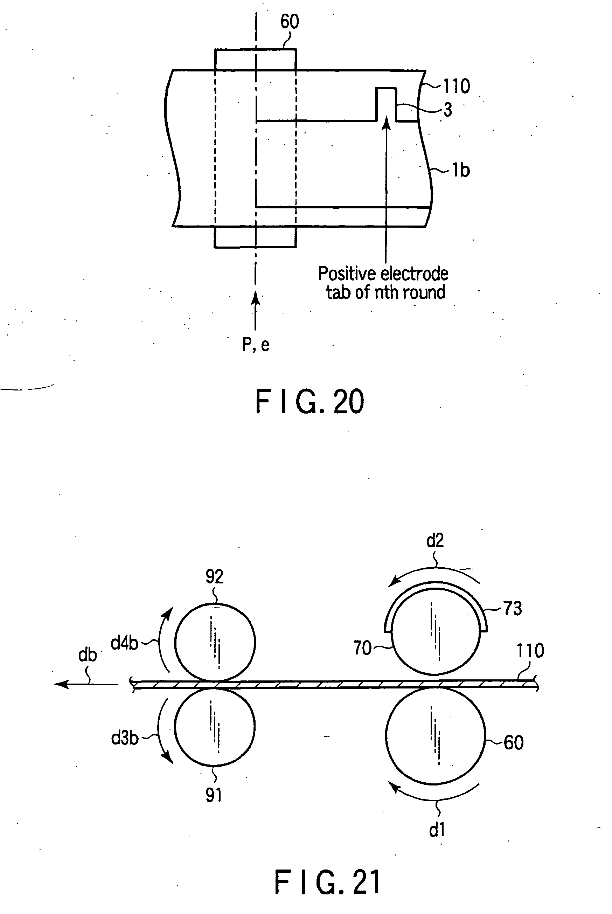

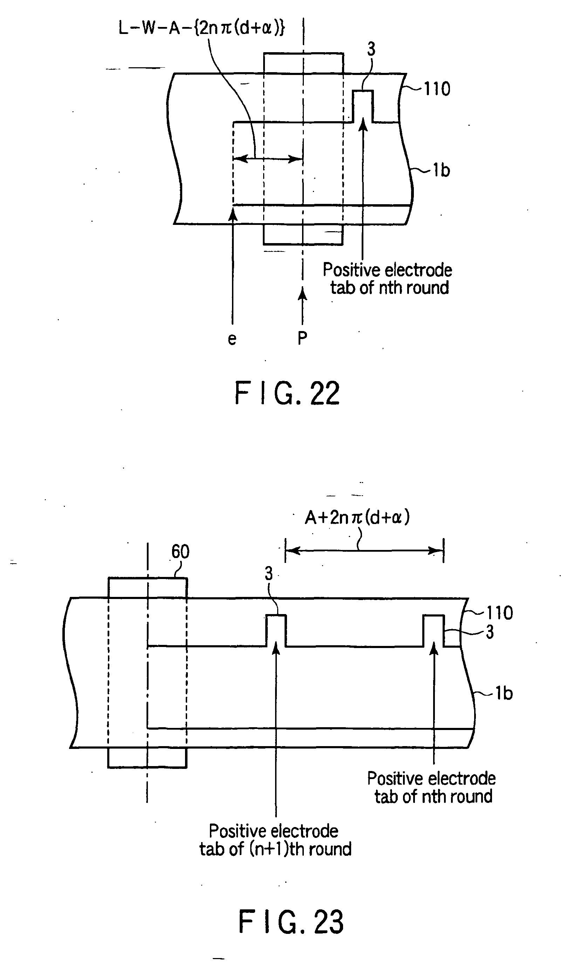

Then, a cutting step using the cutter 50 shown in FIGS. 14 to 16 will be explained. FIG. 17 is a sectional view showing the situation where a press cutting knife starts to be pressed against a receiving roller in a step of manufacturing a positive electrode. FIG. 18 is a sectional view showing the situation where a roller of a carrying mechanism shown in FIG. 14 is rotated in a first rotating direction to cut the side edge of a positive electrode and a positive electrode tab of the nth round from a band-like material in a step of manufacturing a positive electrode in succession to FIG. 17. FIG. 19 is a sectional view showing the situation where the pressing of the press cutting knife against the receiving roller is finished, the band-like material is press-cut and a positive electrode tab of the nth round is formed in a step of manufacturing a positive electrode in succession to FIG. 18. FIG. 20 is a plan view showing the situation where the pressing of the press cutting knife against the receiving roller is finished, the band-like material is press-cut and a positive electrode tab of the nth round is formed in a step of manufacturing a positive electrode. FIG. 21 is a sectional view showing the situation where a press cutting knife 73 is separated from a receiving roller 60 and the roller the carrying mechanism is rotated in a second rotating direction in a step of manufacturing a positive electrode in succession to FIGS. 19 and 20. FIG. 22 is a plan view showing the situation where the band-like material is drawn back such that the distance between the distal end of the press cutting and the press cutting position satisfies the equation (3) in a step of manufacturing a positive electrode in succession to FIG. 21. FIG. 23 is a plan view showing the situation where the band-like material is press-cut and a positive electrode tab of the (n + 1)th round is formed in a step of manufacturing a positive electrode in succession to FIG. 22.

The rollers 91 and 92 are driven and rotated in first directions d3a and d4a to feed a band-like material 110 which is made to pass through a space between the rollers 91 and 92 in the feed direction da and to pass the band-like material 110 containing the positive electrode active material-containing layer 1b through a space between the receiving roller 60 and the press cutting roller 70. In this case, the receiving roller 60 keeps the rotation in the rotating direction d1 and the press cutting roller 70 keeps the rotation in the rotating direction d2.

After that, the rotations of the rollers 91 and 92 are stopped to thereby stop the feed of the band-like material 110 containing the positive electrode active material-containing layer 1b. Then, as shown in FIG. 17, when the pressing of the press cutting blade 73 against the receiving roller 60 starts, the system is put into the first condition that the band-like material 110 can be press-cut and the driving and rotation operation of the rollers 91 and 92 in the first rotating directions d3a and d4a respectively is restarted. In the first condition, as shown in FIG. 18, the driving and rotation operations of the rollers 91 and 92 in the first rotating directions d3a and d4a are respectively kept. After that, as shown in FIGS. 19 and 20, the pressing of the press cutting blade 73 against the receiving roller 60 is finished. As a result, the side edge of the positive electrode 1 and the positive electrode tab 3 of the nth round are cut from the band-like material 110.

Then, as shown in FIG. 21, the system is changed to the second condition that the press cutting blade 73 leaves the receiving roller 60 to switch the driving and rotation of the rollers 91 and 92 to the driving and rotation in second rotating directions d3b and d4b respectively. This allows the band-like material 110 to return back to the returning direction db from a space between the receiving roller. 60 and press cutting roller 70.

As shown in FIG. 22, specifically, the rollers 91 and 92 carry out returning operation for returning the band-like material 110 such that the distance D between a press cutting end e of the band-like material 110 and a press cutting position P where the press cutting blade 73 is pressed against the receiving roller 60 satisfies the above equation (3).

After that, the rotations of the rollers 91 and 92 are stopped to thereby suspend the conveyance of the band-like material 110. Then, the side edge of the positive electrode 1 and the positive electrode tab 3 of the (n + 1)th round are cut from the band-like material 110 under the first condition that the press cutting blade 73 is pressed against the receiving roller 60. As shown in FIG. 23, the above operations ensure that the band-like material 110 can be press-cut such that the distance between the long side to close the start of the windings in the positive electrode tabs 3 of the nth and the long side to close the start of the windings in the positive electrode tabs 3 of (n + 1)th rounds satisfies the following equation (2):

$$A + 2n\pi(d + \alpha) \qquad (2)$$

where $d = T_1 + T_2 + (2 \times T_3)$, $0 \le \alpha \le (d \times 0.035)$, A is a distance from the short side at the start of the windings of the positive electrode to $P_1$ or a distance from the short side at the start of the windings of the negative electrode to $N_1$, $T_1$ is the thickness of the positive electrode, $T_2$ is the thickness of the negative electrode, $T_3$ is the thickness of the separator and n is the ratio of circumference of a circle to its diameter. The distance A does not include the width of the positive electrode tabs 3.

After that, the driving of the carrying mechanism 90 is controlled to alternately repeat the feeding operation for feeding the band-like material 110 in the feeding direction da and the returning operation for returning the band-like material 110 in the returning direction db after the feed operation. Specifically, the rollers 91 and 92 are, for example, driven and rotated in the first rotating directions d3a and d4a respectively, suspended or driven and rotated in the second rotating directions d3b and d4b respectively. Similarly, the same press cutting operation of the band-like material 110 is continued, and finally, the side edge of the positive electrode 1 and the positive electrode tab 3 of 40th round are cut from the band-like material 110.

Incidentally, the cut band-like material 110 is subjected to roll pressing.

Thus, the positive electrode 1 in which the distance between the side to close the (n-1)th round in the positive electrode tabs 3 of the nth round and the side to close nth round in the positive electrode tabs 3 of (n + 1)th round satisfies the above equation (2) is manufactured.

The cutting step in the manufacture of the negative electrode is carried out in the same manner as in the case of the positive electrode.

The cutter used in the method of manufacturing electrodes such as positive and negative electrodes comprises the receiving roller 60, press cutting roller 70 with the press cutting blade 73, driving section 80 and carrying mechanism 90. The carrying mechanism 90 serves to convey the band-like material through a space between the receiving roller 60 and the press cutting roller 70.

The carrying mechanism 90 alternately repeats the feeding action for feeding the band-like material in the feeding direction da so as to cut the side edge of the electrode and one tab from the band-like material by the press cutting roller 70 such that the distance between the tabs of the nth round and (n + 1)th round counted from the inner peripheral side of the electrode group 1 satisfies the equation (2) and the returning action for drawing the band-like material in a reverse or return direction db after the feeding action.

In the method of manufacturing an electrode by using the cutter 50, the band-like material can be press-cut in such a manner that the distances between the tabs are designed to be unequal so as to satisfy the equation (2) taking it into account that the length of the outer periphery of the electrode group 7 increases with increase in the number of turns of the electrode group 7. As a result, each misregistration of the positive electrode tabs 3 and negative electrode tabs 4 in the direction of the width can be suppressed in the press-molded electrode groups 7.

Since the cutter 50 can press-cut the band-like material by a rotating system, the productivity can be more improved than in the case of press-cutting the band-like material by a piston system.

The cutter 50 can be used not only in the production of the electrodes of Examples but in the production of various electrodes for nonaqueous electrolyte batteries. In this case, for example, the size of the press cutting roller 70 or the length L of the press cutting blade 73 may be adjusted, the driving or controlling of the carrying mechanism 90 may be adjusted or two units of the size-adjusted receiving roller 60 and press cutting roller 70 may be used.

It can be confirmed from the above explanations that an electrode cutter that can suppresses the misregistration of the position of the tabs and a method of manufacturing the electrode can be obtained.

The carrying mechanism 90 comprises the pair of rollers 91 and 92 and the driving section 93. However, the present invention is not limited to this structure and various modifications are possible. As to the carrying mechanism 90, it is only necessary that the carrying mechanism 90 be formed so as to manufacture an electrode by alternately repeating a feeding action and a returning action such that the distance between the tabs of the nth round and the (n + 1)th round counted from the inner peripheral side of the electrode group 1 satisfies the above equation (2).

When the side edge of the electrode and one tab are cut from the band-like material, the cutter 50 may cut a tab of the (n + 1)th round after a tab of the nth round is cut. However, the cutter 50 may cut a tab of the nth round after a tab of the (n + 1)th round is cut. When tabs are cut in descending order of n, the distance by which the position of the band-like material is returned back is increased in increments of $2n(d + \alpha)$. When tabs are cut in ascending order of n, on the other hand, the distance by which the position of the band-like material is returned back is decreased in increments of $2n(d + \alpha)$.

The material used to form each active material-containing layer of the positive electrode and negative electrode is not limited to the above examples and may be variously modified. The material used as the nonaqueous electrolyte is not limited to a nonaqueous electrolytic solution and may be various modified. For example, a solid electrolyte or a polymer electrolyte may be used.

These embodiments may be applied not only to nonaqueous electrolytic solution secondary batteries but also to various nonaqueous electrolyte batteries.

EXAMPLES

Examples of the present invention will be explained in detail with reference to the drawings.

(Example 1)

A coating solution containing lithium-cobalt oxide ($LiCoO_2$) as its major component was prepared. The prepared coating solution was applied to each surface of an aluminum foil having a thickness of 15 $\mu$m as a positive electrode current collector and dried to manufacture a positive electrode.

A coating solution containing lithium titanate as its major component was prepared. The prepared coating solution was applied to each surface of an aluminum foil having a thickness of 15 $\mu$m as a negative electrode current collector and dried to manufacture a negative electrode.

The manufactured positive electrode and negative electrode were punched 40 times by a press machine set with a die so designed to be able to form a tab having a width of 10 mm. At this time, the electrode was punched at intervals increased in increments of 2nd. This corresponds to the case where A and $\alpha$ in the equation (2) are respectively 0. The punched positive and negative electrodes were pressed by a roller press so as to have a given density to obtain positive and negative electrodes each having the above structure shown in FIG. 1. Each thickness of the positive and negative electrodes is shown in the following Table 1. As the separator, a resin separator having a thickness shown in Table 1 was prepared.

In each of the positive and negative electrodes, the distance between the tabs is increased in increments of a pitch ($\Delta$) represented by 2nd in order of position from the inner peripheral side to outside peripheral side of the electrode group. In Example 1, the value of d is 0.14 mm and therefore, the pitch ($\Delta$) represented by 2nd is 0.880 mm as shown in Table 1. The distance between the 40th tab positioned at the end of the windings and the 39th tab is a value represented by 2nd*40.

The above positive electrode and the negative electrode were wound with the separator interposed therebetween to form a cylinder coil having 40 turns and this coil was heat-pressed at about 80°C to mold the coil into a flat form which was fixed by an insulation tape to manufacture an electrode group.

The positive and negative electrode tabs were secured to a cap body with an externally takeoff current terminal by laser welding. The electrode group with the cap body was inserted into an outer can and the cap body was laser-welded to the outer can to seal the cap body. A nonaqueous electrolytic solution was injected from an injection port opened in the cap body and a seal plug was set to the injection port. Then the injection port was sealed by laser-welding to manufacture a nonaqueous electrolyte secondary battery.

(Example 2)

A nonaqueous electrolyte secondary battery was manufactured in the same manner as in the above Example 1 except that the thickness of the separator was changed to the value shown in Table 1 below, the value of d was changed to 0.16 mm, and the values shown in Table 1 below were adopted as the pitch ($\Delta$) represented by 2nd and the distance between the 40th tab positioned at the end of the windings and the 39th tab.

(Example 3)

A nonaqueous electrolyte secondary battery was manufactured in the same manner as in the above Example 1 except that the thicknesses of the positive electrode and negative electrode were changed to the values shown in Table 1 below, the value of d was changed to 0.12 mm, and the values shown in Table 1 below were adopted as the pitch ($\Delta$) represented by 2nd and the distance between the 40th tab positioned at the end of the windings and the 39th tab.

(Comparative Examples 1 to 3)

Nonaqueous electrolyte secondary batteries were manufactured in the same manner as in the above Example 1 except that the thicknesses of the positive electrode, negative electrode and separator were changed to the values shown in Table 1 below and the intervals between the tabs were each fixed to 2nd in the range of the first tab positioned at the start of the winding to the 40th tab.

With regard to the obtained secondary batteries in Examples 1 to 3 and Comparative Examples 1 to 3, each misregistration was measured by the method explained below. The results are shown in the following Table 1. The misregistration was found in the following manner: the electrode group obtained by winding and pressing to flatten was observed under a tool microscope to measure a dislocation between the innermost peripheral tab as first tab and the outermost peripheral tab.

Table 1

| | Thickness ofseparator (mm) | Thickness of positive electrode (mm) | Thickness of negative electrode (mm) | Number of tabs | Δ pitch (2nd) (mm) | Distance between 40th tab and 39th tab (mm) | Misregistration (mm) |
|---|---|---|---|---|---|---|---|
| Example 1 | 0.020 | 0.050 | 0.050 | 40 | 0.880 | 35.186 | 0.022 |
| Example 2 | 0.030 | 0.050 | 0.050 | 40 | 1.005 | 40.212 | 0.018 |
| Example 3 | 0.020 | 0.040 | 0.040 | 40 | 0.754 | 30.159 | 0.021 |
| Comparative Example 1 | 0.020 | 0.050 | 0.050 | 40 | 0.880 | 0.880 | 34.306 |
| Comparative Example 2 | 0.030 | 0.050 | 0.050 | 40 | 1.005 | 1.005 | 39.207 |
| Comparative Example 3 | 0.020 | 0.040 | 0.040 | 40 | 0.754 | 0.754 | 29.405 |

As is clear from Table 1, the secondary batteries of Examples 1 to 3 are reduced in the misregistration of the positive and negative electrode tabs, whereas the secondary batteries of Comparative Examples 1 to 3 are increased in the misregistration of the positive and negative electrode tabs.

(Examples 4 to 8)

Nonaqueous electrolyte secondary batteries were manufactured in the same manner as in the above Example 1 except that the number of tabs was changed to those shown in Table 2 below.

Five each of the batteries obtained as above were prepared and subjected to a vibration test described in the UN test which is a guide book with respect to the transportation of a lithium battery and a lithium ion battery. The results are shown in Table 2.

Table 2

| | Number of tabs | Thickness ($\mu$m) | Width (mm) | UN vibration test, percentage of defective (%) |
|---|---|---|---|---|
| | | | | Broken |
| Example 1 | 40 | 15 | 10 | 0 |
| Example 4 | 10 | 15 | 10 | 100 |
| Example 5 | 20 | 15 | 10 | 60 |
| Example 6 | 30 | 15 | 10 | 40 |
| Example 7 | 60 | 15 | 10 | 0 |
| Example 8 | 80 | 15 | 10 | 0 |

As shown in Table 2, Examples 1, 7 and 8 provided with the positive and negative electrode tabs equal to or larger in number than the number of turns exhibited good values. Also, in Examples 4 to 6 provided with the tabs smaller in number than the number of turns, the breakdown of the tab appeared. It is therefore considered that the batteries of these Examples 4 to 6 have insufficient strength. In the case of taking production takt time into account, it is preferable to form 2 tabs in each round, for example, 40 turns $\times$ 2 = 80 tabs, as illustrated in FIG. 3.

(Examples 9 to 16)

Nonaqueous electrolyte secondary batteries were manufactured in the same manner as in the above Example 1 except that the number of positive electrode tabs and the number of negative electrode tabs was respectively fixed to 40 and the thickness of the aluminum foil which was the positive or negative electrode current collector and the width of the tab were changed. Five each of the batteries obtained as above were prepared and subjected to a vibration test described in the UN test which is the guide book with respect to the transportation of a lithium battery and a lithium ion battery. The results are shown in Table 3.

Table 3

| | Number of tabs | Thickness ($\mu$m) | Width (mm) | UN vibration test, percentage of defective (%) |
| --- | --- | --- | --- | --- |
| | | | | Broken |
| Example 1 | 40 | 15 | 10 | 0 |
| Example 9 | 40 | 5 | 10 | 100 |
| Example 10 | 40 | 10 | 10 | 0 |
| Example 11 | 40 | 20 | 10 | 0 |
| Example 12 | 40 | 30 | 10 | 0 |
| Example 13 | 40 | 15 | 3 | 100 |
| Example 14 | 40 | 15 | 5 | 20 |
| Example 15 | 40 | 15 | 15 | 0 |
| Example 16 | 40 | 15 | 20 | 0 |

From Table 3, the thickness of the current collector is 10 $\mu$m to 30 $\mu$m, giving rise to no problem. However, in the case of Example 12 using a current collector having a thickness of 30 $\mu$m, the thickness of the positive and negative electrodes is large and hence the thickness of the electrode group is large. Therefore, the upper limit of the thickness of the current collector is preferably 20 $\mu$m. Also, when the width of the tab is 5 mm to 20 mm, non-disordered result is obtained. However, if the width is 20 mm, it is difficult to dispose the positive electrode tab separately from the negative electrode tab and therefore, the upper limit of the width of the tab is preferably 15 mm.

Next, each battery of Examples 1 and 4 to 16 was subjected to 10C charge-discharge operation to confirm its influence on the tab (breakdown). The results are shown in Table 4. Number of battery of Examples 1 and 4 to 16 was 5, respectively.

Table 4

| | Number of tabs | Thickness ($\mu$m) | Width (mm) | Broken (%) |
| --- | --- | --- | --- | --- |
| Example 1 | 40 | 15 | 10 | 0 |
| Example 4 | 10 | 15 | 10 | 80 |
| Example 5 | 20 | 15 | 10 | 40 |
| Example 6 | 30 | 15 | 10 | 20 |
| Example 7 | 60 | 15 | 10 | 0 |
| Example 8 | 80 | 15 | 10 | 0 |
| Example 9 | 40 | 5 | 10 | 100 |
| Example 10 | 40 | 10 | 10 | 0 |

(continued)

|  | Number of tabs | Thickness ($\mu$m) | Width (mm) | Broken (%) |
|---|---|---|---|---|
| Example 11 | 40 | 20 | 10 | 0 |
| Example 12 | 40 | 30 | 10 | 0 |
| Example 13 | 40 | 15 | 3 | 100 |
| Example 14 | 40 | 15 | 5 | 20 |
| Example 15 | 40 | 15 | 15 | 0 |
| Example 16 | 40 | 15 | 20 | 0 |

As is clear from Table 4, the breakdown or melt of the tab like those observed in the UN vibration test was confirmed in the batteries of Examples 4 to 6 in which the number of the positive and negative electrode tabs was smaller than the number of turns, in the battery of Example 9 in which each thickness of the positive and negative electrode tabs was less than 10 $\mu$m and in the batteries of Examples 13 and 14 in which each width of the positive and negative electrode tabs was 5 mm or less.

(Example 17)

The relation between $\alpha$, 2nn(d + $\alpha$) and the ratio ($\alpha$/d) of $\alpha$ to d in the equation (2) when n is 40, d is 0.15 mm, 0.32 mm and 0.40 mm respectively is shown in Tables 5 to 9.
The value of 2nn(d + $\alpha$) when $\alpha$ is 0 is shown in Table 5.
The value of 2nn(d + $\alpha$) and the value of ($\alpha$/d) when $\alpha$ is 0.001 mm and d is changed to 0.15 mm, 0.32 mm and 0.40 mm respectively are shown in Table 6. As shown in Table 6, although the value of ($\alpha$/d) varies depending on the value of d, it falls in the range of 0.002 to 0.035. Also, a difference of the value of 2nn(d + $\alpha$) from that when $\alpha$ is 0 falls in the range of 0.25 to 0.26 mm. It is found that the distance between tabs is increased at a constant rate with increase in the number of turns.
The value of 2nn(d + $\alpha$) and the value of ($\alpha$/d) when $\alpha$ is 0.002 mm and d is changed to 0.15 mm, 0.32 mm and 0.40 mm respectively are shown in Table 7. As shown in Table 7, although the value of ($\alpha$/d) varies depending on the value of d, it falls in the range of 0.002 to 0.035. Also, a difference of the value of 2nn(d + $\alpha$) from that when $\alpha$ is 0 falls in the range of 0.5 to 0.51 mm. It is found that the distance between tabs is increased at a constant rate with increase in the number of turns.
The value of 2nn(d + $\alpha$) and the value of ($\alpha$/d) when $\alpha$ is 0.004 mm and d is changed to 0.15 mm, 0.32 mm and 0.40 mm respectively are shown in Table 8. As shown in Table 8, although the value of ($\alpha$/d) varies depending on the value of d, it falls in the range of 0.002 to 0.035. Also, a difference of the value of 2nn(d + $\alpha$) from that when $\alpha$ is 0 falls in the range of 1.0 to 1.01 mm. It is found that the distance between tabs is increased at a constant rate with increase in the number of turns.
The value of 2nn(d + $\alpha$) and the value of ($\alpha$/d) when $\alpha$ is 0.005 mm and d is changed to 0.15 mm, 0.32 mm and 0.40 mm respectively are shown in Table 9. As shown in Table 9, although the value of ($\alpha$/d) varies depending on the value of d, it falls in the range of 0.002 to 0.035. Also, a difference of the value of 2nri(d + $\alpha$) from that when $\alpha$ is 0 is constant and is 1.26 mm.

Table 5

| d [mm] | n | 2nn(d+$\alpha$) | $\alpha$/d |
|---|---|---|---|
| 0.15 | 40 | 37.7 | 0 |
| 0.32 | 40 | 80.42 | 0 |
| 0.40 | 40 | 100.53 | 0 |
| $\alpha$ = 0.000 | | | |

Table 6

| d [mm] | n | 2nn (d+α) | α/d | Difference |
|---|---|---|---|---|
| 0.15 | 40 | 37.95 | 0.0067 | 0.25 |
| 0.32 | 40 | 80.68 | 0.0031 | 0.26 |
| 0.40 | 40 | 100.78 | 0.0025 | 0.25 |
| $\alpha$ = 0.001 | | | | |

Table 7

| d [mm] | n | 2nn(d+α) | α/d | Difference |
|---|---|---|---|---|
| 0.15 | 40 | 38.20 | 0.0133 | 0.50 |
| 0.32 | 40 | 80.93 | 0.0063 | 0.51 |
| 0.40 | 40 | 101.03 | 0.0050 | 0.50 |
| $\alpha$ = 0.002 | | | | |

Table 8

| d [mm] | n | 2nn (d+α) | α/d | Difference |
|---|---|---|---|---|
| 0.15 | 40 | 38.70 | 0.0267 | 1.00 |
| 0.32 | 40 | 81.43 | 0.0125 | 1.01 |
| 0.40 | 40 | 101.54 | 0.01 | 1.01 |
| $\alpha$ = 0.004 | | | | |

Table 9

| d [mm] | n | 2nn(d+α) | α/d | Difference |
|---|---|---|---|---|
| 0.15 | 40 | 38.96 | 0.0333 | 1.26 |
| 0.32 | 40 | 81.68 | 0.0156 | 1.26 |
| 0.40 | 40 | 101.79 | 0.0125 | 1.26 |
| $\alpha$ = 0.005 | | | | |

(Example 18)

A coating solution containing lithium-cobalt oxide ($LiCoO_2$) as its major component was prepared. The prepared coating solution was applied to each surface of an aluminum foil having a thickness of 15 $\mu$m as a positive electrode current collector excluding one end part parallel to the longitudinal direction, and dried to form an active material-containing layer on the positive electrode current collector, thereby obtaining a positive electrode band-like material.

A coating solution containing lithium titanate as its major component was prepared. The prepared coating solution was applied to each surface of an aluminum foil having a thickness of 15 $\mu$m as a negative electrode current collector excluding one end part parallel to the longitudinal direction, and dried to form an active material-containing layer on the negative electrode current collector, thereby obtaining a negative electrode band-like material.

The manufactured positive electrode and: negative electrode band-like materials were cut into an electrode form by using a cutter shown in FIGS. 14 to 16. As the second press cutting blade of the cutter, a blade with a convex pattern 75a designed to have a width of 10 mm which was the width of the tab was used. The returning action in the second condition was exerted such that the distance D between the press cutting terminal end of the band-like material and the position where the press cutting blade 73 was pressed against the receiving roller 60 satisfied the equation (3). Since L is 140 mm, W is 10 mm, A is a value shown in Table 10 and $\alpha$ is 0, the distance D is a value given by 40 - (2nnd). 40 tabs were cut from each band-like material.

The cut positive and negative electrodes were pressed by a roller press so as to have a given density to obtain a positive electrode and a negative electrode as shown in FIGS. 8 and 9. The thicknesses $T_1$ and $T_2$ of the positive electrode and negative electrode are shown in Table 10 below. As the separator, a resin separator $T_3$ having a thickness as shown in Table 10 was prepared. Therefore, the value of d is 0.14 mm.

In each of the positive and negative electrodes, the distance between the tabs is increased in increments of a pitch ($\Delta$) represented by 2nd in order of position from the inner peripheral side to outside peripheral side of the electrode group. In Example 18, the value of d is 0.14 mm and therefore, the pitch ($\Delta$) represented by 2nd is 0.880 mm as shown in Table 10. The distance between the 40th tab long side close to 39th tab and the 39th tab long side close to 38th tab is a value represented by A + 2nd*40. The 40th tab was positioned at the end of the windings.

The above positive electrode and the negative electrode were wound with the separator interposed therebetween to form a flat coil having 40 turns and this coil was heat-pressed at about 80°C to mold the coil into a flat form in a thickness of 14 mm. The flat form coil was fixed by an insulation tape to manufacture an electrode group.

The positive and negative electrode tabs were secured to a cap body with an externally takeoff current terminal by laser welding. The electrode group with the cap body was inserted into an outer can and the cap body was welded to the outer can to seal the cap body. A nonaqueous electrolytic solution was injected from an injection port opened in the cap body and a seal plug was set to the injection port. Then the injection port was sealed by laser welding to manufacture a nonaqueous electrolyte secondary battery.

(Examples 19 and 20)

A nonaqueous electrolyte secondary battery was manufactured in the same manner as in Example 18 except that the thicknesses of the positive electrode, negative electrode and separator were changed to those shown in Table 10 below.

(Examples 21 and 23)

A nonaqueous electrolyte secondary battery was manufactured in the same manner as in Example 18 except that the value of $\alpha$ was designed to be 0.001 mm and the distance D was designed to be L - W - A - {2n$\pi$(d + a)}. The values of n, L, W and A are the same as those used in Example 18, and a value calculated based on the thicknesses of the positive electrode, negative electrode and separator as shown in Table 10 was used as the value of d.

With regard to the obtained secondary batteries of Examples 18 to 23, the misregistration of the tab was measured in the same manner as mentioned above and the results are shown in the following Table 10. When the misregistration of the tab is a plus value, this means that the tab positioned on the (n + 1)th round is closer to the outer peripheral side than the tab positioned on the nth round. When the misregistration of the tab is a minus value, on the other hand, this means that the tab positioned on the (n + 1)th round is closer to the inner peripheral side than the tab positioned on the nth round.

Table 10

| | A (mm) | $\alpha$ (mm) | ($\alpha/d$) | Thickness of separator $T_3$ (mm) | Thickness of positive electrode $T_1$ (mm) | Thickness of negative electrode $T_2$ (mm) | Number of tabs | $\Delta$ pitch (2nd) (mm) | Distance between 40th tab and 39th tab (mm) | Misregistration (mm) |
|---|---|---|---|---|---|---|---|---|---|---|
| Example 18 | 90 | 0 | 0 | 0.020 | 0.050 | 0.050 | 40 | 0.880 | 125.19 | -0.022 |
| Example 19 | 90 | 0 | 0 | 0.030 | 0.050 | 0.050 | 40 | 1.005 | 130.21 | -0.018 |
| Example 20 | 90 | 0 | 0 | 0.020 | 0.040 | 0.040 | 40 | 0.754 | 120.16 | -0.021 |
| Example 21 | 90 | 0.001 | 0.0071 | 0.020 | 0.050 | 0.050 | 40 | 0.892 | 125.44 | +0.004 |
| Example 22 | 90 | 0.001 | 0.0063 | 0.030 | 0.050 | 0.050 | 40 | 1.005 | 130.46 | +0.003 |
| Example 23 | 90 | 0.001 | 0.0083 | 0.020 | 0.040 | 0.040 | 40 | 0.767 | 120.41 | +0.004 |

As is clear from Table 10, the tab positioned on the (n + 1)th round is closer to the outer peripheral side than the tab positioned on the nth round in Examples 21 to 23. Also, the absolute value of the misregistration is smaller than those of Examples 18 to 20. This implies that the misregistration of the tab in press molding can be offset by setting $\alpha$, so that the positions of tabs are easily aligned.

(Examples 24 and 28)

Nonaqueous electrolyte secondary batteries were manufactured in the same manner as in Example 18 except that each number of the positive and negative electrode tabs was set to 40 and the length of the innermost periphery of the electrode group in the longitudinal direction and the width of the tab were changed to those shown in the following Table 11. The value (%) of the width of the tab when the length of the innermost periphery in the longitudinal direction is set to 100% is described together in Table 11 as a proportion (%). Five each of the batteries obtained as above were prepared and subjected to a vibration test described in the UN test which is the guide book with respect to the transportation of a lithium battery and a lithium ion battery. The results are shown in Table 11.

Table 11

| | Number of tabs | Innermost peripheral length (mm) | Tab width (mm) | Proportion (%) | UN vibration test, percentage of defective (%) |
|---|---|---|---|---|---|
| | | | | | Broken |
| Example 18 | 40 | 40 | 10 | 25 | 0 |
| Example 24 | 40 | 40 | 8 | 20 | 60 |
| Example 25 | 40 | 40 | 38 | 95 | 0 |
| Example 26 | 40 | 60 | 15 | 25 | 0 |
| Example 27 | 40 | 60 | 12 | 20 | 40 |
| Example 28 | 40 | 60 | 57 | 95 | 0 |

As is clear from Table 11, the width of the tab may have a length corresponding to 25 to 95% of the length of the innermost periphery in the longitudinal direction. The width of the tab is more preferably in the range of 25 to 90%. If the width of the tab is in this range, such a situation where the tab is positioned at the bent part of the electrode group can be avoided. This can prevent the tab from being wrinkled or broken. The tab positioned at the bent part of the electrode group is scarcely returned by press molding. If the width of the tab is in the range of 25 to 90%, the positions of the tabs after press molding can be aligned.

Although the above Examples have been described as to the examples of batteries using a nonaqueous electrolytic solution, the present invention may be, of course, applied to batteries using a solid electrolyte or a polymer electrolyte instead of the nonaqueous electrolytic solution. Further, the positive and negative electrode active materials are not limited to the above types and other active materials may be used.

**Claims**

1. A method of manufacturing a positive electrode or negative electrode in a nonaqueous electrolyte battery, the battery comprising:

    a case (20);
    an electrode group (7) provided in the case (20), comprising a positive electrode (1), a negative electrode (2) and a separator (8), and the positive electrode (1), the negative electrode (2) and the separator (8) being spirally coiled in a flat form;
    positive electrode tabs (3) which are electrically connected to at least two positions among tab positions $P_n$ of the positive electrode (1) and projected from one end surface of the electrode group (7); and
    negative electrode tabs (4) which are electrically connected to at least two positions among tab positions $N_n$ of the negative electrode (2) and projected from the one end surface,
    wherein the tab positions $P_n$ represent a set of tab positions of the positive electrode (1) of an nth round counted from an inner periphery of the electrode group (7), the tab positions $N_n$ represent a set of tab positions of the negative electrode (2) of an nth round counted from an inner periphery of the electrode group (7), and a distance between $P_n$ and $P_{n+1}$ and a distance between $N_n$ and $N_{n+1}$ each satisfy the following equation (2):

$$A + 2n\pi(d + \alpha) \qquad (2)$$

where $d = T_1 + T_2 + (2 \times T_3)$, $0 \le \alpha \le (d \times 0.035)$, A is a distance from a short side at a start of windings of the positive electrode (1) to $P_1$ or a distance from a short side at a start of windings of the negative electrode (2) to $N_1$, $T_1$ is a thickness of the positive electrode (1), $T_2$ is a thickness of the negative electrode (2), $T_3$ is a thickness of the separator (8) and n is a ratio of circumference of a circle to its diameter, the method being **characterized by** comprising:

passing a band-like material comprising a band-like current collector and an active material-containing layer formed on the band-like current collector excluding one end part parallel to a long side of the band-like current collector through a space between a first roller having a blade and a second roller to cut the band-like material by the blade of the first roller, thereby cutting one tab from the one end part of the band-like current collector;
returning a position of the band-like material back to a direction reverse to a forward direction; and
repeating the cutting and returning actions alternately to cut a plurality of tabs from the one end part of the band-like current collector.

2. The method according to claim 1, wherein the cutting is performed in ascending order of n of the tab and a distance by which a position of the band-like material is returned is decreased in a decrement of $2n(d + \alpha)$.

3. The method according to claim 1, wherein a distance by which the band-like material is returned satisfies the following equation (4):

$$D = M - W - A - \{2n\pi(d + \alpha)\} \qquad (4)$$

where M is a length of the blade along a direction of rotation of the first roller and W is a width of the tab.

4. The method according to claim 1, wherein $\alpha$ satisfies the following equation:

$$(d \times 0.002) \le \alpha \le (d \times 0.035).$$

5. The method according to claim 1, wherein a width of the positive electrode tab (3) and a width of the negative electrode tab (4) are respectively 25% to 95% of an innermost peripheral length of the electrode group (7).

6. The method according to claim 1, wherein a width of the positive electrode tab (3) and a width of the negative electrode tab (4) are respectively in the range of 10 mm to 20 mm, and a thickness of the positive electrode tab (3) and a thickness of the negative electrode tab (4) are respectively in the range of 10 $\mu$m to 30 $\mu$m.

7. The method according to claim 1, wherein the distance between the positive electrode tabs (3) and the distance between the negative electrode tabs (4) are respectively 300 mm or less.

8. The method according to claim 1, wherein the number of the positive electrode tabs (3) and the number of the negative electrode tabs (4) are respectively equal to or larger than the number of turns of the electrode group (7).

**Patentansprüche**

1. Verfahren zum Herstellen einer positiven Elektrode oder negativen Elektrode in einer wasserfreien Elektrolytbatterie, wobei die Batterie aufweist:

ein Gehäuse (20);

eine Elektrodengruppe (7), die in dem Gehäuse (20) bereitgestellt ist, mit einer positiven Elektrode (1), einer negativen Elektrode (2) und einem Separator (8), wobei die positive Elektrode (1), die negative Elektrode (2) und der Separator (8) spiralförmig in einer flachen Form aufgewickelt sind;

positive Elektrodenfahnen (3), die mit mindestens zwei Positionen unter den Fahnenpositionen $P_n$ der positiven Elektrode (1) elektrisch verbunden sind und von einer Endfläche der Elektrodengruppe (7) hervorstehen; und negative Elektrodenfahnen (4), die mit mindestens zwei Positionen unter den Fahnenpositionen $N_n$ der negativen Elektrode (2) elektrisch verbunden sind und von der einen Endfläche hervorstehen,

wobei die Fahnenpositionen $P_n$ einen Satz von Fahnenpositionen der positiven Elektrode (1) einer n-ten Runde wiedergeben, die von einem inneren Rand der Elektrodengruppe (7) gezählt wird, die Fahnenpositionen $N_n$ einen Satz von Fahnenpositionen der negativen Elektrode (2) einer n-ten Runde wiedergeben, die von einem inneren Rand der Elektrodengruppe (7) gezählt wird, und ein Abstand zwischen $P_n$ und $P_{n+1}$ und ein Abstand zwischen $N_n$ und $N_{n+1}$ jeweils die folgende Gleichung (2) erfüllt:

$$A + 2n\pi(d + \alpha) \qquad (2)$$

bei der $d = T_1 + T_2 + (2 \times T_3)$, $0 \leq \alpha \leq (d \times 0{,}035)$, A ein Abstand einer kurzen Seite bei dem Beginn der Windungen der positiven Elektrode (1) zu $P_1$ oder ein Abstand einer kurzen Seite bei dem Beginn der Windungen der negativen Elektrode (2) bis $N_1$ ist, T1 eine Dicke der positiven Elektrode (1) ist, $T_2$ eine Dicke der negativen Elektrode (2) ist, $T_3$ eine Dicke des Separators (8) ist und n ein Verhältnis des Umfangs eines Kreises zu seinem Durchmesser ist, wobei das Verfahren **dadurch gekennzeichnet ist, dass** es umfasst:

Hindurchführen eines bandähnlichen Materials mit einem bandähnlichen Stromabnehmer und einer ein aktives Material enthaltenden Lage, die auf dem bandähnlichen Stromabnehmer mit Ausnahme eines Endabschnitts parallel zu einer langen Seite des bandähnlichen Stromabnehmers ausgebildet ist, durch einen Raum zwischen einer ersten Rolle mit einer Klinge und einer zweiten Rolle, um das bandähnliche Material durch die Klinge der ersten Rolle zu schneiden, wodurch eine Fahne aus dem einen Endabschnitt des bandähnlichen Stromabnehmers ausgeschnitten wird;

Rückführen einer Position des bandähnlichen Materials zu einer Richtung, die entgegengesetzt zu einer Vorwärtsrichtung ist; und

abwechselndes Wiederholen des Schneide- und Rückführarbeitsschritts, um eine Vielzahl von Fahnen von dem einen Endteil des bandähnlichen Stromabnehmers auszuschneiden.

2. Verfahren nach Anspruch 1, bei dem das Schneiden in aufsteigender Reihenfolge n der Fahne durchgeführt wird und ein Abstand, um den eine Position des bandähnlichen Materials zurückgeführt wird, mit einem Dekrement von $2\pi(d + \alpha)$ verringert wird.

3. Verfahren nach Anspruch 1, bei dem ein Abstand, um den das bandähnliche Material zurückgeführt wird, die folgende Gleichung (4) erfüllt:

$$D = M - W - A - \{2n\pi(d + \alpha)\} \qquad (4)$$

bei der M eine Länge der Klinge entlang einer Rotationsrichtung der ersten Rolle ist und W eine Breite der Fahne ist.

4. Verfahren nach Anspruch 1, bei dem $\alpha$ die folgende Gleichung erfüllt:

$$(d \times 0{,}002) \leq \alpha \leq (d \times 0{,}035).$$

5. Verfahren nach Anspruch 1, bei dem eine Breite der positiven Elektrodenfahne (3) und eine Breite der negativen Elektrodenfahne (4) jeweils 25 % bis 95 % einer innersten Länge am Rand der Elektrodengruppe (7) sind.

6. Verfahren nach Anspruch 1, bei dem eine Breite der positiven Elektrodenfahne (3) und eine Breite der negativen Elektrodenfahne (4) jeweils in einem Bereich von 10 mm bis 20 mm ist und eine Dicke der positiven Elektrodenfahne (3) und eine Dicke der negativen Elektrodenfahne (4) jeweils in einem Bereich von 10 $\mu$m bis 30 $\mu$m ist.

**7.** Verfahren nach Anspruch 1, bei dem der Abstand zwischen den positiven Elektrodenfahnen (3) und der Abstand zwischen den negativen Elektrodenfahnen (4) jeweils 300 mm oder weniger ist.

**8.** Verfahren nach Anspruch 1, bei dem die Anzahl der positiven Elektrodenfahnen (3) und die Anzahl der negativen Elektrodenfahnen (4) jeweils gleich oder größer als die Anzahl der Windungen der Elektrodengruppe (7) ist.

**Revendications**

**1.** Procédé de fabrication d'une électrode positive ou d'une électrode négative dans une batterie à électrolyte non aqueux, la batterie comprenant :

un boîtier (20) ;
un groupe d'électrodes (7) prévu dans le boîtier (20), comprenant une électrode positive (1), une électrode négative (2) et un séparateur (8), et l'électrode positive (1), l'électrode négative (2) et le séparateur (8) étant enroulés en spirale en une forme plate ;
des languettes d'électrode positive (3) qui sont connectées électriquement à au moins deux positions parmi les positions de languette $P_n$ de l'électrode positive (1) et qui s'étendent d'une surface d'extrémité du groupe d'électrodes (7) ; et
des languettes d'électrode négative (4) qui sont connectées électriquement à au moins deux positions parmi les positions de languette $N_n$ de l'électrode négative (2) et qui s'étendent de ladite surface d'extrémité,
dans lequel les positions de languette $P_n$ représentent un ensemble de positions de languette de l'électrode positive (1) d'un nième tour compté à partir d'une périphérie interne du groupe d'électrodes (7), les positions de languette $N_n$ représentent un ensemble de positions de languette de l'électrode négative (2) d'un nième tour compté à partir d'une périphérie interne du groupe d'électrodes (7), et une distance entre $P_n$ et $P_{n+1}$ et une distance entre $N_n$ et $N_{n+1}$ satisfont chacune à l'équation (2) suivante :

$$A + 2n\pi(d + \alpha) \qquad (2)$$

où $d = T_1 + T_2 + (2 \times T_3)$, $0 \leq \alpha \leq (d \times 0{,}035)$, A est une distance d'un côté court à un début des enroulements de l'électrode positive (1) à $P_1$ ou une distance d'un côté court à un début des enroulements de l'électrode négative (2) à $N_1$, $T_1$ est une épaisseur de l'électrode positive (1), $T_2$ est une épaisseur de l'électrode négative (2), $T_3$ est une épaisseur du séparateur (8) et $\pi$ est un rapport entre la circonférence d'un cercle et son diamètre, le procédé étant **caractérisé en ce qu'**il comprend :

le passage d'un matériau en forme de bande comprenant un collecteur de courant en forme de bande et une couche contenant un matériau actif formée sur le collecteur de courant en forme de bande à l'exclusion d'une partie d'extrémité parallèle à un côté long du collecteur de courant en forme de bande à travers un espace entre un premier rouleau comportant une lame et un deuxième rouleau pour découper le matériau en forme de bande par la lame du premier rouleau, découpant de ce fait une languette de ladite partie d'extrémité du collecteur de courant en forme de bande ;
le retour d'une position du matériau en forme de bande dans une direction inverse d'une direction en avant ; et
la répétition des actions de découpe et de retour alternativement pour découper une pluralité de languettes de ladite partie d'extrémité du collecteur de courant en forme de bande.

**2.** Procédé selon la revendication 1, dans lequel la découpe est effectuée dans l'ordre ascendant de n de la languette et une distance de laquelle une position de matériau en forme de bande est ramenée est diminuée par décrément de $2\pi(d + \alpha)$.

**3.** Procédé selon la revendication 1, dans lequel une distance de laquelle le matériau en forme de bande est ramené satisfait à l'équation (4) suivante :

$$D = M - W - A - \{2n\pi(d + \alpha)\} \qquad (4)$$

où M est une longueur de la lame le long d'une direction de rotation du premier rouleau et W est une largeur de la languette.

4. Procédé selon la revendication 1, dans lequel $\alpha$ satisfait à l'équation suivante :

$$(d \times 0,002) \leq \alpha \leq (d \times 0,035).$$

5. Procédé selon la revendication 1, dans lequel une largeur de la languette d'électrode positive (3) et une largeur de la languette d'électrode négative (4) sont respectivement égales à 25 % à 95 % d'une longueur périphérique la plus intérieure du groupe d'électrodes (7).

6. Procédé selon la revendication 1, dans lequel une largeur de la languette d'électrode positive (3) et une largeur de la languette d'électrode négative (4) sont respectivement dans la plage de 10 mm à 20 mm, et une épaisseur de la languette d'électrode positive (3) et une épaisseur de la languette d'électrode négative (4) sont respectivement dans la plage de 10 $\mu$m à 30 $\mu$m.

7. Procédé selon la revendication 1, dans lequel la distance entre les languettes d'électrode positive (3) et la distance entre les languettes d'électrode négative (4) sont respectivement de 300 mm ou moins.

8. Procédé selon la revendication 1, dans lequel le nombre des languettes d'électrode positive (3) et le nombre des languettes d'électrode négative (4) sont respectivement égaux ou supérieurs au nombre de tours du groupe d'électrodes (7) .

FIG. 1

FIG. 2

FIG. 3

FIG. 4

FIG. 5

FIG. 6

FIG. 7

26

$A+2n\pi(d+\alpha)$      $A+2(n+1)\pi(d+\alpha)$

W        W        W

40     43      41     44      42

3n       3(n+1)       3(n+2)

1

1b

nth round      (n+1)th round      (n+2)th round

F I G. 8

$A+2n\pi(d+\alpha)$      $A+2(n+1)\pi(d+\alpha)$

W        W        W

45     48      46     49      47

4n       4(n+1)       4(n+2)

2

2b

nth round      (n+1)th round      (n+2)th round

F I G. 9

3    4    9

# F I G. 10A

Coil press

Direction of winding

3    4    9

# F I G. 10B

FIG. 11A

FIG. 11B

F I G. 12

F I G. 13

50

90 { 91
    92
    93

70

60

80

100

# FIG. 14

F I G. 15

F I G. 16

F I G. 17

F I G. 18

F I G. 19

Positive electrode
tab of nth round

P, e

F I G. 20

F I G. 21

$L-W-A-\{2n\pi(d+\alpha)\}$

3

110

1b

e    P

Positive electrode
tab of nth round

F I G. 22

$A+2n\pi(d+\alpha)$

60

3

110
3

1b

Positive electrode
tab of nth round

Positive electrode
tab of (n+1)th round

F I G. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11111340 A
- JP 2006260786 A
- JP 2001085042 A
- JP 11339758 A
- JP 2005209494 A